# EUROPEAN PATENT APPLICATION

(11) **EP 4 783 514 A1**
(43) Date of publication of application: **29.07.2026**
(21) Application number: 24878942.2
(22) Date of filing: 14.10.2024
(51) Int. Cl.: H04L 9/08

(54) **QUANTUM KEY DISTRIBUTION METHOD, APPARATUS, AND SYSTEM**

(30) Priority: 19.10.2023 CN 202311375652
(71) Applicant: HUAWEI TECHNOLOGIES CO., LTD., Shenzhen 518129 (CN)
(72) Inventor: LI, Zhengyu, Shenzhen, Guangdong 518129 (CN); SU, Changzheng, Shenzhen, Guangdong 518129 (CN); LUO, Yanxing, Shenzhen, Guangdong 518129 (CN)
(74) Representative: Maiwald GmbH
(86) International application number: PCT/CN2024/124632
(87) International publication number: WO 2025/082298

(57) **Abstract**

This application discloses a quantum key distribution method, apparatus, and system, relating to the field of network technologies. A first quantum device generates a modulated optical signal that carries quantum information and classical information. Both the classical information and the quantum information are modulated on at least one polarization of the modulated optical signal, the modulated optical signal includes a plurality of subcarriers in different frequency segments, the classical information and the quantum information are on different subcarriers among the plurality of subcarriers, and the classical information includes quantum key agreement information. The first quantum device sends the modulated optical signal to a second quantum device via an optical fiber link. By modulating the quantum information and the classical information on the same polarization of the optical signal, a system achieves a high capacity. The quantum information and the classical information are modulated on subcarriers in different frequency segments within the optical signal, so that respective modulation accuracy requirements of a classical signal and a quantum signal can be satisfied. Reusing a set of devices to transmit both the quantum information and the classical information reduces hardware costs.

## Description

This application claims priority to Chinese Patent Application No. 202311375652.9, filed on October 19, 2023 and entitled "QUANTUM KEY DISTRIBUTION METHOD, APPARATUS, AND SYSTEM", which is incorporated herein by reference in its entirety.

### TECHNICAL FIELD

This application relates to the field of network technologies, and in particular, to a quantum key distribution method, apparatus, and system.

### BACKGROUND

With the development of quantum computing, quantum attacks pose great threats to widely used cryptosystems. The quantum attacks are attack algorithms running on quantum computers. The quantum attacks can crack many key agreement algorithms currently in use. For example, they can crack key agreement algorithms used alongside the advanced encryption standard (advanced encryption standard, AES) and the SM4 block cipher, such as RSA (a public key encryption algorithm proposed by Ron Rivest, Adi Shamir, and Leonard Adleman), a Diffie-Hellman key exchange (Diffie-Hellman key exchange, DH) algorithm, and the like. Quantum computers are expected to become practical in next decades. If eavesdroppers intercept and store data encrypted using current cryptographic algorithms and transmitted over networks, and then once quantum computers are available, apply quantum attacks to crack the cryptographic algorithms used for the stored data, the eavesdroppers can recover underlying plaintext. This is a serious threat for sensitive information that must remain confidential over long periods of time. Therefore, it is urgent to design cryptographic techniques that are resistant to quantum attacks.

Quantum key distribution (quantum key distribution, QKD) is a secure key distribution technology, enabling secure transmission of a quantum key (quantum key, QK) between two communication parties far from each other. Security of quantum key distribution is guaranteed by fundamental principles of quantum mechanics. In quantum networks, transmission of the quantum key is unconditionally secure in theory.

In related technologies for implementation of quantum key distribution, a transmitter (transmitter, Tx) transmits quantum optical signals to a receiver (receiver, Rx) via an optical fiber link to transfer quantum information, and the transmitter and the receiver need to mutually transmit, over a classical network, classical information for quantum key agreement, to jointly generate a same quantum key. However, how to complete transmission of the quantum information and the classical information between the transmitter and the receiver is crucial to implement quantum key distribution.

### SUMMARY

This application provides a quantum key distribution method, apparatus, and system.

According to a first aspect, a quantum key distribution method is provided. The method includes: A first quantum device generates a modulated optical signal, where the modulated optical signal carries quantum information and classical information, both the classical information and the quantum information are modulated on at least one polarization of the modulated optical signal, the modulated optical signal includes a plurality of subcarriers in different frequency segments, the classical information and the quantum information are on different subcarriers among the plurality of subcarriers, and the classical information includes quantum key agreement information; and the first quantum device sends the modulated optical signal to a second quantum device via an optical fiber link, where the quantum information and the quantum key agreement information are used by the first quantum device and the second quantum device to jointly generate a same quantum key.

In this application, a transmitter modulates and transmits the quantum information and the classical information including the quantum key agreement information on the same polarization of the optical signal. In comparison with a solution in which the quantum information and the classical information are respectively modulated and transmitted on different polarizations of the optical signal, this application saves one polarization degree of freedom, and can double a system capacity. In this application, the quantum information and the classical information are respectively modulated on subcarriers in different frequency segments in the optical signal, that is, frequency division multiplexing is performed on the optical signal, so that a receiver can separately obtain the quantum information and the classical information by demodulating different subcarriers. Demodulation for the quantum information is slightly affected by a signal received power for the classical information, so that the receiver can achieve a high signal-to-noise ratio of a classical signal and a high signal-to-noise ratio of a quantum signal, and modulation accuracy requirements of the classical signal and the quantum signal can be met. In addition, a set of devices is reused to transmit both the quantum information and the classical information, thereby reducing hardware costs.

Optionally, the quantum key agreement information includes one or more of random sampling data, error correction auxiliary information, a privacy amplification parameter, basis comparison information, or a consistency check parameter. The quantum key agreement information is information that needs to be exchanged between the first quantum device and the second quantum device during data processing in a process of generating the quantum key.

Optionally, the classical information further includes service communication data.

In this application, in addition to including the quantum key agreement information between the first quantum device and the second quantum device, the classical information may further include the service communication data. In other words, one optical fiber may be used for transmission of both the information for generating the quantum key and the service communication data. In this way, the optical fiber link can be used to a maximum extent, thereby improving a bandwidth utilization rate.

Optionally, the service communication data includes encrypted data. The encrypted data may be obtained through encryption by using the quantum key generated by the first quantum device, or the encrypted data may be obtained through encryption by using a session key (or an encryption key) fused or derived based on the quantum key.

Optionally, an implementation in which the first quantum device generates the modulated optical signal includes: The first quantum device generates an analog modulated signal based on the quantum information and the classical information, where the analog modulated signal includes a quantum signal frequency segment obtained through modulation based on the quantum information and a classical signal frequency segment obtained through modulation based on the classical information, and there is no overlapping frequency between the quantum signal frequency segment and the classical signal frequency segment; the first quantum device performs signal adjustment processing on the analog modulated signal, to obtain a target modulated signal, where a difference between an average amplitude of the classical signal frequency segment and an average amplitude of the quantum signal frequency segment in the target modulated signal is greater than a first amplitude threshold; and the first quantum device performs electro-optic modulation on the target modulated signal, to obtain the modulated optical signal, where each subcarrier in the modulated optical signal corresponds to one quantum signal frequency segment or one classical signal frequency segment.

In this implementation, signal adjustment processing is performed on the analog modulated signal including the quantum signal frequency segment and the classical signal frequency segment, so that the difference between the average amplitude of the quantum signal frequency segment and the average amplitude of the classical signal frequency segment in the adjusted target modulated signal meets a specified requirement. In this way, in the modulated optical signal obtained through modulation based on the target modulated signal, power strength of a quantum optical signal can be far weaker than power strength of a classical optical signal, thereby meeting transmission performance requirements of the quantum optical signal and the classical optical signal. As a transmitter of quantum key distribution, the first quantum device may emit an optical signal by using one laser, generate an analog modulated signal by using one digital-to-analog converter (digital-to-analog converter, DAC), and finally modulate, by using one electro-optic modulator, an analog modulated signal obtained through signal modulation processing on the optical signal emitted from the laser, to obtain a to-be-transmitted modulated optical signal. The first quantum device needs one laser, one DAC, and one electro-optic modulator for generating the modulated optical signal, so that hardware costs are low.

Optionally, a difference between an average amplitude of the classical signal frequency segment and an average amplitude of the quantum signal frequency segment in the analog modulated signal is less than a second amplitude threshold, and the second amplitude threshold is less than the first amplitude threshold.

In this application, the difference between the average amplitude of the classical signal frequency segment and the average amplitude of the quantum signal frequency segment in the generated analog modulated signal is small, to ensure sampling accuracy of the DAC, so that the classical signal and the quantum signal each have the high signal-to-noise ratio.

Optionally, an implementation in which the first quantum device performs signal adjustment processing on the analog modulated signal, to obtain the target modulated signal includes: The first quantum device performs filtering processing on the analog modulated signal by using a filter, to obtain the target modulated signal, where the quantum signal frequency segment is in a first frequency band of the filter, the classical signal frequency segment is in a second frequency band of the filter, and frequency attenuation of the first frequency band is greater than frequency attenuation of the second frequency band.

In this implementation, signal adjustment processing on the analog modulated signal is implemented by using one filter. A frequency response function of the filter is designed to be related to distribution of the quantum signal frequency segment and the classical signal frequency segment in the analog modulated signal. In this way, frequency attenuation of a frequency band formed by the filter for the quantum signal frequency segment is relatively large, where a function of the frequency band is similar to that of a stopband of the filter; and frequency attenuation of a frequency band formed by the filter for the classical signal frequency segment is relatively small, where a function of the frequency band is similar to that of a passband of the filter. In this way, the difference between the average amplitude of the classical signal frequency segment and the average amplitude of the quantum signal frequency segment in the modulated signal obtained through filtering processing meets the specified requirement.

Optionally, another implementation in which the first quantum device performs signal adjustment processing on the analog modulated signal, to obtain the target modulated signal includes: The first quantum device performs splitting processing on the analog modulated signal based on distribution areas of the quantum signal frequency segment and the classical signal frequency segment in the analog modulated signal, to obtain a plurality of split signals; the first quantum device separately performs filtering processing on the plurality of split signals by using a plurality of filters, to obtain one or more quantum filtered signals and one or more classical filtered signals, where each quantum filtered signal includes one or more adjacent quantum signal frequency segments, and each classical filtered signal includes one or more adjacent classical signal frequency segments; the first quantum device attenuates the one or more quantum filtered signals; and the first quantum device performs combining processing on all the classical filtered signals and all the attenuated quantum filtered signals, to obtain the target modulated signal.

In this implementation, signal adjustment processing on the analog modulated signal is implemented in a splitting filtering manner. In the splitting filtering manner, a flatter frequency response is more easily formed in a passband and a stopband, thereby reducing digital signal processing difficulty.

Optionally, another implementation in which the first quantum device generates the modulated optical signal includes: The first quantum device generates a first analog modulated signal based on the quantum information, and generates a second analog modulated signal based on the classical information, where the first analog modulated signal includes one or more quantum signal frequency segments, the second analog modulated signal includes one or more classical signal frequency segments, and there is no overlapping frequency between the quantum signal frequency segment and the classical signal frequency segment; the first quantum device attenuates the first analog modulated signal, to cause a difference between an average amplitude of the classical signal frequency segment in the second analog modulated signal and an average amplitude of the quantum signal frequency segment in the attenuated first analog modulated signal to be greater than a third amplitude threshold; and the first quantum device generates the modulated optical signal based on the second analog modulated signal and the attenuated first analog modulated signal, where each subcarrier in the modulated optical signal corresponds to one quantum signal frequency segment or one classical signal frequency segment.

In this implementation, attenuation processing is performed on the first analog modulated signal including the quantum signal frequency segment, so that the difference between the average amplitude of the quantum signal frequency segment in the attenuated first analog modulated signal and the average amplitude of the classical signal frequency segment in the second analog modulated signal meets a specified requirement. In this way, in the modulated optical signal obtained through final modulation, power strength of a quantum optical signal can be far weaker than power strength of a classical optical signal, thereby meeting transmission performance requirements of the quantum optical signal and the classical optical signal.

Optionally, an implementation in which the first quantum device generates the modulated optical signal based on the second analog modulated signal and the attenuated first analog modulated signal includes: The first quantum device performs combining processing on the second analog modulated signal and the attenuated first analog modulated signal, to obtain a combined analog modulated signal; and the first quantum device performs electro-optic modulation on the combined analog modulated signal, to obtain the modulated optical signal.

In this implementation, as a transmitter of quantum key distribution, the first quantum device may emit an optical signal by using one laser, and generate two analog modulated signals by using two DACs. Then, after performing attenuation processing on one of the analog modulated signals that includes a quantum signal frequency segment, the first quantum device performs combining on one analog modulated signal obtained through attenuation processing and the other analog modulated signal including a classical signal frequency segment. Finally, the first quantum device modulates, by using one electro-optic modulator, a combined analog modulated signal on the optical signal emitted from the laser, to obtain a to-be-transmitted modulated optical signal. The first quantum device needs one laser, one electro-optic modulator, and two DACs for generating the modulated optical signal, so that hardware costs are low.

Optionally, another implementation in which the first quantum device generates the modulated optical signal based on the second analog modulated signal and the attenuated first analog modulated signal includes: The first quantum device performs, by using a first electro-optic modulator, electro-optic modulation on the attenuated first analog modulated signal, to obtain a first optical signal; the first quantum device performs, by using a second electro-optic modulator, electro-optic modulation on the second analog modulated signal, to obtain a second optical signal; and the first quantum device performs beam combining processing on the first optical signal and the second optical signal, to obtain the modulated optical signal.

In this implementation, as a transmitter of quantum key distribution, the first quantum device may emit an optical signal by using one laser, split the optical signal into two optical signals by using an optical beam splitter, and generate two analog modulated signals by using two DACs. Then, after performing attenuation processing on one of the analog modulated signals that includes a quantum signal frequency segment, the first quantum device modulates, by using one of electro-optic modulators, one analog modulated signal obtained through attenuation processing on one of the optical signals from the laser, and modulates, by using the other electro-optic modulator, the other analog modulated signal including a classical signal frequency segment on the other optical signal from the laser. Finally, the first quantum device performs beam combining on two modulated optical signals by using an optical beam combiner, to obtain a to-be-transmitted modulated optical signal. The first quantum device needs one laser, two DACs, and two electro-optic modulators for generating the modulated optical signal, so that hardware costs are low.

Optionally, the first analog modulated signal and the second analog modulated signal are respectively generated by different digital-to-analog converters.

Optionally, the modulated optical signal is from a same laser.

According to a second aspect, a quantum key distribution method is provided. The method includes: A second quantum device receives, via an optical fiber link, a modulated optical signal sent by a first quantum device, where the modulated optical signal carries quantum information and classical information, both the classical information and the quantum information are modulated on at least one polarization of the modulated optical signal, the modulated optical signal includes a plurality of subcarriers in different frequency segments, the classical information and the quantum information are on different subcarriers among the plurality of subcarriers, and the classical information includes quantum key agreement information; and the second quantum device obtains the quantum information and the classical information based on the modulated optical signal, where the quantum information and the quantum key agreement information are used by the first quantum device and the second quantum device to jointly generate a same quantum key.

In this application, the quantum information and the classical information are respectively modulated on subcarriers in different frequency segments in the optical signal, that is, frequency division multiplexing is performed on the optical signal, so that a receiver can separately obtain the quantum information and the classical information by demodulating different subcarriers. Demodulation for the quantum information is slightly affected by a signal received power for the classical information, so that the receiver can achieve a high signal-to-noise ratio of a classical signal and a high signal-to-noise ratio of a quantum signal, and modulation accuracy requirements of the classical signal and the quantum signal can be met. In addition, a set of devices is reused to transmit both the quantum information and the classical information, thereby reducing hardware costs.

Optionally, the quantum key agreement information includes one or more of random sampling data, error correction auxiliary information, a privacy amplification parameter, basis comparison information, or a consistency check parameter.

Optionally, the classical information further includes service communication data.

Optionally, the service communication data includes encrypted data.

Optionally, an implementation in which the second quantum device obtains the quantum information and the classical information based on the modulated optical signal includes: The second quantum device converts the received modulated optical signal into an analog signal by using a coherent detector, where the analog signal includes a quantum signal frequency segment and a classical signal frequency segment, there is no overlapping frequency between the quantum signal frequency segment and the classical signal frequency segment, the quantum signal frequency segment corresponds to a subcarrier that carries the quantum information and that is in the modulated optical signal, and the classical signal frequency segment corresponds to a subcarrier that carries the classical information and that is in the modulated optical signal; the second quantum device performs received signal adjustment processing on the analog signal, to obtain a target signal, where a difference between an average amplitude of the classical signal frequency segment and an average amplitude of the quantum signal frequency segment in the target signal is less than an amplitude threshold; and the second quantum device separately performs sampling on the classical signal frequency segment and the quantum signal frequency segment in the target signal by using an analog-to-digital converter, to obtain the classical information and the quantum information.

In this implementation, the receiver needs only one analog-to-digital converter to complete sampling on the analog signal, so that hardware costs are low.

Optionally, an implementation in which the second quantum device performs received signal adjustment processing on the analog signal, to obtain the target signal includes: The second quantum device performs filtering processing on the analog signal by using a filter, to obtain the target signal, where the quantum signal frequency segment is in a first frequency band of the filter, the classical signal frequency segment is in a second frequency band of the filter, and frequency attenuation of the first frequency band is less than frequency attenuation of the second frequency band.

In this implementation, signal adjustment processing on the analog signal is implemented by using one filter. A frequency response function of the filter is designed to be related to distribution of the quantum signal frequency segment and the classical signal frequency segment in the analog signal. In this way, frequency attenuation of a frequency band formed by the filter for the quantum signal frequency segment is relatively small, where a function of the frequency band is similar to that of a passband of the filter; and frequency attenuation of a frequency band formed by the filter for the classical signal frequency segment is relatively large, where a function of the frequency band is similar to that of a stopband of the filter. In this way, the average amplitude of the classical signal frequency segment and the average amplitude of the quantum signal frequency segment in the target signal obtained through filtering processing are similar.

Optionally, another implementation in which the second quantum device performs received signal adjustment processing on the analog signal, to obtain the target signal includes:
The second quantum device performs splitting processing on the analog signal based on distribution areas of the quantum signal frequency segment and the classical signal frequency segment in the analog signal, to obtain a plurality of split signals; the second quantum device separately performs filtering processing on the plurality of split signals by using a plurality of filters, to obtain one or more quantum filtered signals and one or more classical filtered signals, where each quantum filtered signal includes one or more adjacent quantum signal frequency segments, and each classical filtered signal includes one or more adjacent classical signal frequency segments; the second quantum device attenuates the one or more classical filtered signals; and the second quantum device performs combining processing on all the quantum filtered signals and all the attenuated classical filtered signals, to obtain the target signal.

In this implementation, signal adjustment processing on the analog signal is implemented in a splitting filtering manner. In the splitting filtering manner, a flatter frequency response is more easily formed in a passband and a stopband, thereby reducing digital signal processing difficulty.

Optionally, another implementation in which the second quantum device obtains the quantum information and the classical information based on the modulated optical signal includes: The second quantum device converts the received modulated optical signal into an analog signal by using a coherent detector, where the analog signal includes a quantum signal frequency segment and a classical signal frequency segment, there is no overlapping frequency between the quantum signal frequency segment and the classical signal frequency segment, the quantum signal frequency segment corresponds to a subcarrier that carries the quantum information and that is in the modulated optical signal, and the classical signal frequency segment corresponds to a subcarrier that carries the classical information and that is in the modulated optical signal; the second quantum device performs sampling on the classical signal frequency segment in the analog signal by using a first analog-to-digital converter, to obtain the classical information; and the second quantum device performs sampling on the quantum signal frequency segment in the analog signal by using a second analog-to-digital converter, to obtain the quantum information.

In this implementation, the receiver separately performs sampling on the classical signal frequency segment and the quantum signal frequency segment in the analog signal by using two analog-to-digital converters, to meet respective sampling accuracy requirements.

According to a third aspect, a quantum key distribution apparatus is provided. The apparatus includes a plurality of functional modules, and the plurality of functional modules interact with each other to implement the method in the first aspect and the implementations of the first aspect. The plurality of functional modules may be implemented based on software, hardware, or a combination of software and hardware, and the plurality of functional modules may be randomly combined or divided based on specific implementation.

According to a fourth aspect, a quantum key distribution apparatus is provided. The apparatus includes a plurality of functional modules, and the plurality of functional modules interact with each other to implement the method in the second aspect and the implementations of the second aspect. The plurality of functional modules may be implemented based on software, hardware, or a combination of software and hardware, and the plurality of functional modules may be randomly combined or divided based on specific implementation.

According to a fifth aspect, a quantum key distribution system is provided, and includes a first quantum device and a second quantum device. The first quantum device and the second quantum device are connected via an optical fiber link, the first quantum device is configured to implement the method in the first aspect and the implementations of the first aspect, and the second quantum device is configured to implement the method in the second aspect and the implementations of the second aspect.

According to a sixth aspect, a quantum device is provided, and includes a processor and a memory. The memory is configured to store a computer program, where the computer program includes program instructions. The processor is configured to invoke the computer program, to implement the method in the first aspect and the implementations of the first aspect, or the method in the second aspect and the implementations of the second aspect.

According to a seventh aspect, a computer-readable storage medium is provided. The computer-readable storage medium stores instructions, and when the instructions are executed by a processor, the method in the first aspect and the implementations of the first aspect, or the method in the second aspect and the implementations of the second aspect is implemented.

According to an eighth aspect, a computer program product is provided, including a computer program. When the computer program is executed by a processor, the method in the first aspect and the implementations of the first aspect, or the method in the second aspect and the implementations of the second aspect is implemented.

According to a ninth aspect, a chip is provided. The chip includes a programmable logic circuit and/or program instructions. When the chip runs, the method in the first aspect and the implementations of the first aspect, or the method in the second aspect and the implementations of the second aspect is implemented.

### BRIEF DESCRIPTION OF DRAWINGS

FIG. 1 is a diagram of an implementation process of quantum key distribution according to an embodiment of this application;
FIG. 2 is a diagram of a quantum key generation system according to a related technology;
FIG. 3 is a diagram of transmitting classical information and quantum information according to the related technology;
FIG. 4 is a diagram of modulation of classical information and quantum information according to the related technology;
FIG. 5 is a diagram of a structure of a quantum key distribution system according to an embodiment of this application;
FIG. 6 is a schematic flowchart of a quantum key distribution method according to an embodiment of this application;
FIG. 7 is a schematic flowchart of an implementation in which a first quantum device generates a modulated optical signal according to an embodiment of this application;
FIG. 8 is a diagram of performing signal adjustment processing on an analog modulated signal according to an embodiment of this application;
FIG. 9 is another diagram of performing signal adjustment processing on an analog modulated signal according to an embodiment of this application;
FIG. 10 is still another diagram of performing signal adjustment processing on an analog modulated signal according to an embodiment of this application;
FIG. 11 is yet another diagram of performing signal adjustment processing on an analog modulated signal according to an embodiment of this application;
FIG. 12 is still yet another diagram of performing signal adjustment processing on an analog modulated signal according to an embodiment of this application;
FIG. 13 is a diagram of a process of generating a modulated optical signal according to an embodiment of this application;
FIG. 14 is a schematic flowchart of another implementation in which a first quantum device generates a modulated optical signal according to an embodiment of this application;
FIG. 15 is a diagram of another process of generating a modulated optical signal according to an embodiment of this application;
FIG. 16 is a diagram of still another process of generating a modulated optical signal according to an embodiment of this application;
FIG. 17 is a diagram of a structure of a coherent receiving machine according to an embodiment of this application;
FIG. 18 is a diagram of a structure of a single polarization receiving machine according to an embodiment of this application;
FIG. 19 is a diagram of a structure of a coherent detector according to an embodiment of this application;
FIG. 20 is a diagram of performing received signal adjustment processing on an analog signal according to an embodiment of this application;
FIG. 21 is another diagram of performing received signal adjustment processing on an analog signal according to an embodiment of this application;
FIG. 22 is a diagram of a structure of a quantum key distribution apparatus according to an embodiment of this application;
FIG. 23 is a diagram of a structure of another quantum key distribution apparatus according to an embodiment of this application; and
FIG. 24 is a diagram of a hardware structure of a quantum device according to an embodiment of this application.

### DESCRIPTION OF EMBODIMENTS

To make objectives, technical solutions, and advantages of this application clearer, the following further describes implementations of this application in detail with reference to accompanying drawings.

With rapid development of information technologies, people have increasingly high requirements on security of communication. Quantum communication is a technology developed on the basis of quantum mechanics and a classical information theory, and ensures the security of communication by using a fundamental principle of the quantum mechanics. In the quantum communication technology, quantum key distribution is the most mature technology, which implements unconditional and secure distribution of a symmetric key between legitimate sending and receiving parties on the premise that some security keys have been shared. Unconditional security means that there is no restriction on a compute resource of an eavesdropper in a channel.

There are many types of quantum key distribution protocols and systems. Currently, two mainstream ones applied are discrete-variable quantum key distribution (discrete-variable quantum key distribution, DV-QKD) and continuous-variable quantum key distribution (continuous-variable quantum key distribution, CV-QKD). For the DV-QKD, a single photon signal needs to be encoded, and a single photon detector needs to work in a low-temperature environment. For the CV-QKD, coherent light is to be encoded, and detection is performed by using a low-noise coherent receiving machine (also referred to as a coherent detector), without a single photon source and a single photon detector, so that an existing industry chain in the communication field can be reused to a great extent. Therefore, the CV-QKD has potential advantages of high integration and low costs.

For the CV-QKD, a transmitter uses a coherent state as a light source, and modulates a central position of the coherent state by using a modulator. After a modulated quantum optical signal is transmitted through an optical fiber, a receiver performs detection by using a homodyne detector or a heterodyne detector. An analog electrical signal output by the detector undergoes analog-to-digital conversion (analog-to-digital conversion, ADC) sampling and then enters a data processing module. The data processing module performs corresponding data processing and evaluation, to finally obtain a secure quantum key.

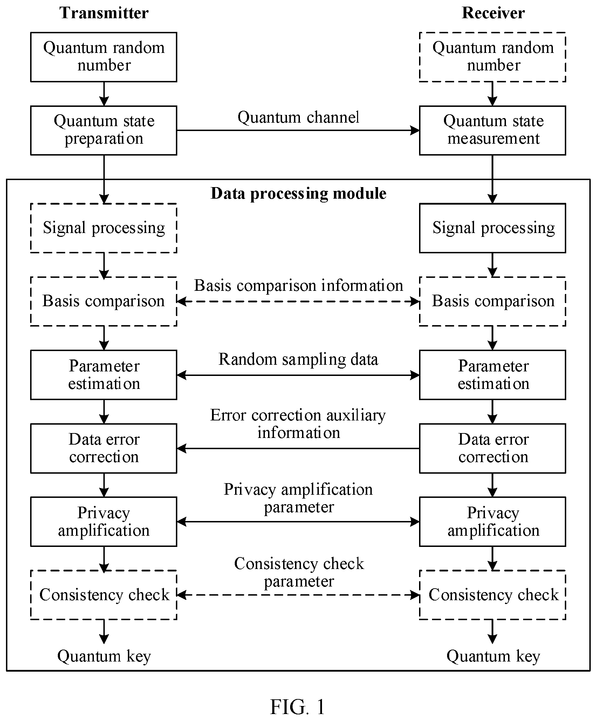

For example, FIG. 1 is a diagram of an implementation process of quantum key distribution according to an embodiment of this application. As shown in FIG. 1, a transmitter first generates a quantum random number as original encoding information, then encodes a coherent state (that is, performs quantum state preparation) based on the generated quantum random number, and then transmits an encoded coherent state signal (that is, a quantum optical signal) to a receiver over a quantum channel. Correspondingly, the receiver generates a quantum random number as original key information, and randomly measures an X or P regular component of a coherent state (that is, performs quantum state measurement) by using a homodyne detector or a heterodyne detector based on the generated quantum random number. Then, the transmitter and the receiver each perform data processing and evaluation by using a data processing module, to generate a same quantum key. Refer to FIG. 1. Functions of the data processing module usually include signal processing, parameter estimation, data error correction, and privacy amplification (privacy amplification, PA).

Signal processing usually means that the receiver performs digital signal processing on a sampled signal to obtain an appropriate regular component measurement result.

Parameter estimation means that sending and receiving parties determine, by randomly comparing some data, an amount of information stolen by an eavesdropper in a channel, and determine whether a secure quantum key can be generated in a current round of distribution process. If the secure quantum key cannot be generated, a system usually selects to terminate a processing procedure and waits for data accumulation in a next round of distribution process. If the secure quantum key can be generated, a subsequent processing procedure continues to be performed. In this process, a classical channel is needed, so that the sending and receiving parties can losslessly synchronize information, where random sampling data is synchronized.

Data error correction means that the sending and receiving parties complete synchronization of key data between the sending and receiving parties by sharing a syndrome or another error correction auxiliary information over a lossless classical channel. A key obtained after the error correction may be referred to as a corrected key for short. In this process, a classical channel is also needed, so that the sending and receiving parties can losslessly synchronize information, where error correction auxiliary information is synchronized.

Privacy amplification means that the sending and receiving parties perform a same hash operation to compress the corrected key of the sending and receiving parties and output a final quantum key. In this process, a classical channel is also needed, so that the sending and receiving parties can losslessly synchronize information, where a key parameter of the hash operation (referred to as a privacy amplification parameter for short) is synchronized.

Optionally, still refer to FIG. 1. The functions of the data processing module further include basis comparison. In some protocols, the receiver randomly measures one specific regular component of the coherent state, and does not obtain information about two components at the same time. Therefore, a comparison process is further needed between signal processing and parameter estimation. In other words, the receiver discloses, to the transmitter, a regular component specifically measured by the receiver, and the transmitter retains only information about the regular component, to generate the quantum key. In this process, a classical channel is also needed, so that the sending and receiving parties can losslessly synchronize information, where related information of a measurement basis (referred to as basis comparison information for short) used by the receiver is synchronized.

Optionally, still refer to FIG. 1. The functions of the data processing module further include a consistency check. To ensure consistency of quantum keys generated by the sending and receiving parties, and avoid some low-probability logic or protocol errors, a key consistency check process is usually to be added. This process may be added after a data error correction step, or may be added after a privacy amplification step. Alternatively, a check is performed when an application end uses a key. In this process, a classical channel is also needed, so that the sending and receiving parties can losslessly synchronize information, where a key parameter of a consistency check operation (referred to as a consistency check parameter for short) is synchronized.

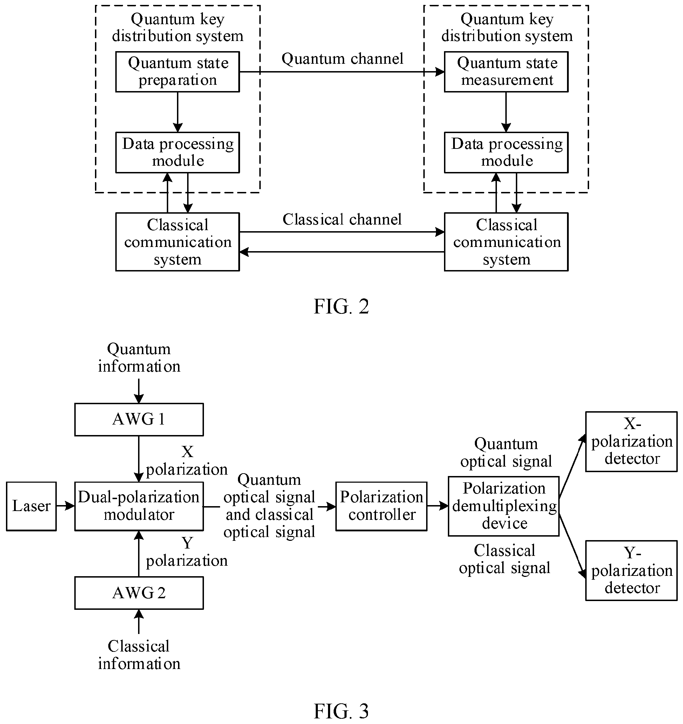

It can be learned from the data processing module described above that, in the quantum key distribution process, the transmitter and the receiver need to frequently use the classical channel for communication, to losslessly transmit information related to each data processing step. A conventional solution is to use another classical communication system to transmit this part of information. For example, a data processing module in a QKD device transmits to-be-sent classical information to a router, the router transmits the to-be-sent classical information to a receiver over a communication network according to a communication routing protocol, and a router of the receiver receives and parses the information and then transmits the information to a data processing module in the receiver. The transmitter and the receiver are connected via an optical fiber link, to transmit the quantum optical signal. The optical fiber link may also carry the classical channel. In other words, the quantum channel and the classical channel are in a same optical fiber, but use different wavelengths. Wavelength division multiplexing is used for the two channels. This is also a common solution in the industry. For example, FIG. 2 is a diagram of a quantum key generation system in a related technology. As shown in FIG. 2, a classical communication system and a quantum key distribution system are two separate systems. A data processing module in the quantum key distribution system transmits to-be-sent classical information to the classical communication system, and the classical communication system completes bidirectional communication between sending and receiving parties over a classical channel. The classical channel does not necessarily require a direct connection between the sending and receiving parties, and information transmission may also be implemented over a classical communication network. For a case in which the classical channel requires a direct connection between the sending and receiving parties through an optical fiber, a classical communication module with a wavelength different from that of a quantum optical signal may be considered to be selected, and the quantum optical signal and the classical communication module use a same optical fiber in a wavelength division multiplexing manner, thereby reducing optical fiber resources.

However, considering that an independent classical communication system is needed in a conventional solution and implementation costs are high, a solution in which quantum information and classical information are modulated on a same optical signal for joint transmission is proposed in the related technology. Two common implementation solutions are as follows.

In a first implementation solution, as shown in FIG. 3, a transmitter uses one laser, and output light from the laser enters a dual-polarization (dual-polarization, DP) modulator. A signal waveform of quantum information and a signal waveform of classical information are respectively generated by using different arbitrary waveform generators (arbitrary waveform generators, AWGs). Then, the dual-polarization modulator modulates a quantum signal and a classical signal respectively on different polarization states of an optical signal. A common dual-polarization modulator is a dual-polarization in-phase and quadrature (in-phase and quadrature, IQ) modulator (DP-IQ modulator), which is a common device in optical communication. For example, refer to FIG. 3. The signal waveform of the quantum information is generated by using an AWG 1, and then the quantum signal is modulated on one polarization state of the optical signal, for example, an X polarization; and the signal waveform of the classical information is generated by using an AWG 2, and then the classical signal is modulated on the other polarization state of the optical signal, for example, a Y polarization. In this way, output light from the dual-polarization modulator includes both a quantum optical signal and a classical optical signal, and the quantum optical signal and the classical optical signal are in a polarization multiplexing state. A receiver first recovers polarization crosstalk with noise in an optical fiber channel by using a polarization controller, then separates the quantum optical signal from the classical optical signal by using a polarization demultiplexing device, and sends the separated quantum optical signal and the separated classical optical signal to different polarization detectors respectively. For example, the separated quantum optical signal is sent to an X-polarization detector, and the separated classical optical signal is sent to a Y-polarization detector. The polarization demultiplexing device may be, for example, a polarization diversity coherent receiving machine. In this way, joint transmission of the classical information and the quantum information is implemented. Compared with the conventional solution, the solution is more integrated and saves one laser.

However, the first implementation solution is essentially equivalent to combining a classical channel and a quantum channel in a polarization multiplexing manner. In the first implementation solution, the receiver needs to first recover a polarization change in the channel by using the polarization controller, causing high hardware costs. In addition, because the classical information occupies one polarization, only the other polarization can be used for the quantum information. For the quantum channel, this is equivalent to losing half of a bandwidth, affecting transmission efficiency of the quantum information.

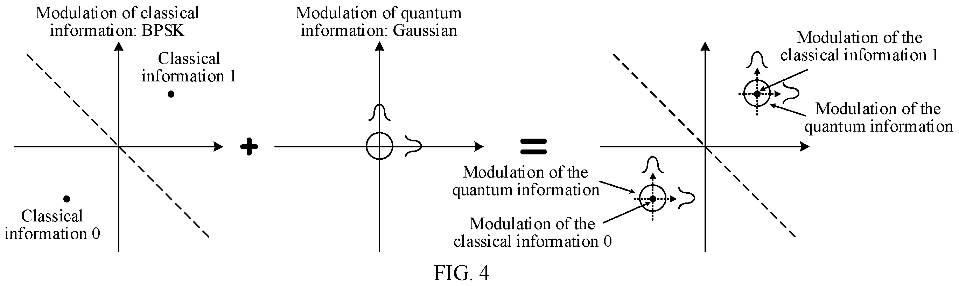

In a second implementation solution, as shown in FIG. 4, a transmitter adds modulation of a quantum signal based on a modulation result of a classical signal. For example, the classical signal is a binary phase shift keying (binary phase shift keying, BPSK) signal, and the BPSK signal is originally only two points on a phase plane, where a point in the lower left represents classical information 0, and a point in the upper right represents classical information 1. By using Gaussian modulation as an example, the quantum signal is two-dimensional quasi-continuous Gaussian distribution on a phase plane. If the classical signal and the quantum signal are superposed together, this is equivalent to superposing a translation of two-dimensional quasi-continuous Gaussian distribution on a BPSK modulation result. Because an amplitude of the quantum signal is much lower than an amplitude of the classical signal, even if quantum modulation is superposed on a BPSK modulation result of the classical signal, a signal-to-noise ratio of the BPSK signal is almost not affected. In this way, both the classical information and the quantum information are generated and transmitted.

In the second implementation solution, although both the classical signal and the quantum signal can be generated on a same polarization, it is difficult to modulate and demodulate the classical signal and the quantum signal. As a result, it is very difficult to implement the second implementation solution. In terms of modulation, because a difference between the amplitude of the classical signal and the amplitude of the quantum signal is large, modulation on both the classical signal and the quantum signal is difficult. In terms of receiving, a change in a received power of the classical signal caused by a slight fluctuation of a channel greatly affects demodulation for the quantum signal, and causes deterioration of a signal-to-noise ratio of the quantum signal. Consequently, a modulation accuracy requirement of the quantum signal usually cannot be met.

In view of this, this application provides a technical solution, to resolve a problem that a signal-to-noise ratio of a quantum signal with a relatively low amplitude deteriorates due to a large difference between an amplitude of a classical signal and the amplitude of the quantum signal when both the quantum signal and the classical signal are generated on a same polarization. A specific technical solution is as follows: A first quantum device generates a modulated optical signal, where the modulated optical signal carries quantum information and classical information, and both the classical information and the quantum information are modulated on at least one polarization of the modulated optical signal. That both the classical information and the quantum information are modulated on the at least one polarization of the modulated optical signal herein means that the at least one polarization of the modulated optical signal carries both the classical information and the quantum information. Both the classical information and the quantum information may alternatively be modulated on a plurality of polarizations of the modulated optical signal, that is, the plurality of polarizations of the modulated optical signal may carry both the classical information and the quantum information. For example, an X polarization of the modulated optical signal may carry the classical information and the quantum information, and a Y polarization may carry the classical information or the quantum information; the Y polarization of the modulated optical signal may carry the classical information and the quantum information, and the X polarization may carry the classical information or the quantum information; or the X polarization and the Y polarization of the modulated optical signal each carry the classical information and the quantum information. In addition, the modulated optical signal generated by the first quantum device includes a plurality of subcarriers in different frequency segments, and the classical information and the quantum information are on different subcarriers among the plurality of subcarriers. In other words, the quantum information and the classical information in the modulated optical signal are respectively modulated on subcarriers in different frequency segments. The classical information includes quantum key agreement information. The first quantum device sends the modulated optical signal to a second quantum device via an optical fiber link, where the quantum information and the quantum key agreement information in the classical information that are carried in the modulated optical signal are used by the first quantum device and the second quantum device to jointly generate a same quantum key. In this application, the quantum information and the classical information are modulated and transmitted on the same polarization of the optical signal. In comparison with the first implementation solution, this application saves one polarization degree of freedom, and can double a system capacity. In comparison with the second implementation solution, different from superposing and modulating the quantum signal on the modulation result of the classical signal for transmission, in this application, the quantum information and the classical information are respectively modulated on subcarriers in different frequency segments in the optical signal, that is, frequency division multiplexing is performed on the optical signal, so that a receiver can separately obtain the quantum information and the classical information by demodulating different subcarriers. Demodulation for the quantum information is slightly affected by a signal received power for the classical information, so that the receiver can achieve a high signal-to-noise ratio of a classical signal and a high signal-to-noise ratio of a quantum signal, and modulation accuracy requirements of the classical signal and the quantum signal can be met. The quantum device in this application may be a quantum key distribution device.

Optionally, the quantum key agreement information includes one or more of random sampling data, error correction auxiliary information, a privacy amplification parameter, basis comparison information, or a consistency check parameter. The random sampling data is information that needs to be synchronized between the first quantum device and the second quantum device when performing a parameter estimation step. The error correction auxiliary information is information that needs to be synchronized between the first quantum device and the second quantum device when performing a data error correction step. The privacy amplification parameter is information that needs to be synchronized between the first quantum device and the second quantum device when performing a privacy amplification step. The basis comparison information is information that needs to be synchronized between the first quantum device and the second quantum device when performing a basis comparison step. The consistency check parameter is information that needs to be synchronized between the first quantum device and the second quantum device when performing a consistency check step. For specific implementations of the parameter estimation step, the data error correction step, the privacy amplification step, the basis comparison step, and the consistency check step, refer to the quantum key distribution process shown in FIG. 1. Details are not described herein again in this embodiment of this application.

In this embodiment of this application, in addition to including the quantum key agreement information between the first quantum device and the second quantum device, the classical information may further include service communication data. In other words, one optical fiber may be used for transmission of both the information for generating the quantum key and the service communication data. In this way, the optical fiber link can be used to a maximum extent, thereby improving a bandwidth utilization rate.

Optionally, the service communication data includes encrypted data. The encrypted data may be obtained through encryption by using the quantum key generated by the first quantum device, or the encrypted data may be obtained through encryption by using a session key (or an encryption key) fused or derived based on the quantum key.

The following describes in detail the technical solution provided in this embodiment of this application.

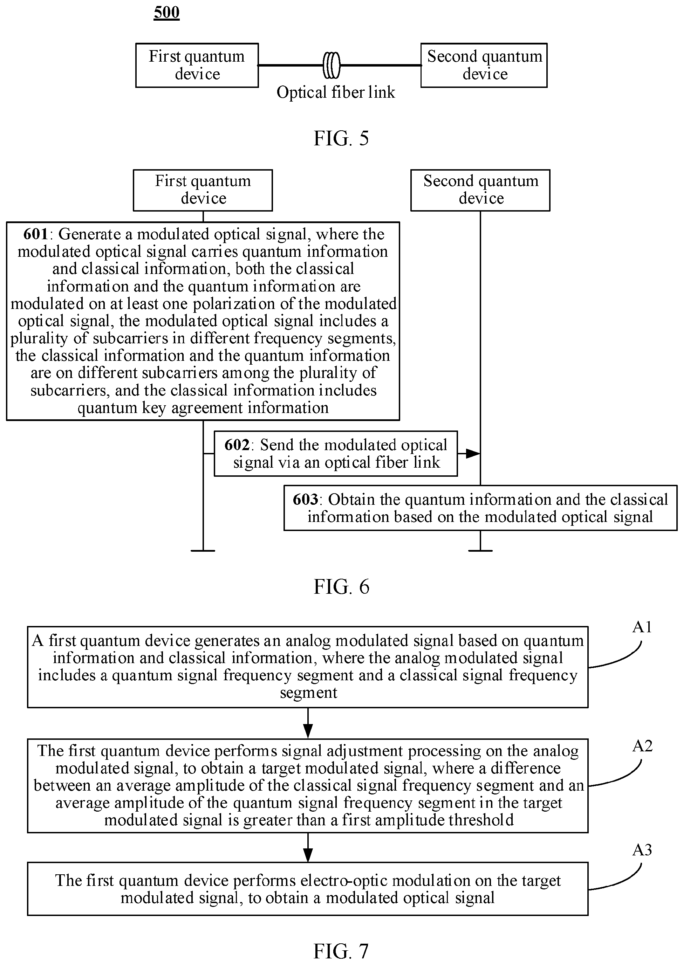

This embodiment of this application may be applied to a quantum key distribution system. For example, FIG. 5 is a diagram of a structure of a quantum key distribution system according to an embodiment of this application. As shown in FIG. 5, a quantum key distribution system 500 includes a first quantum device and a second quantum device. The first quantum device and the second quantum device are connected via an optical fiber link. Optionally, the quantum key distribution system 500 may be a CV-QKD system, may be a CV-QKD module, or may be a coherent system integrating CV-QKD and classical communication.

In this embodiment of this application, an example in which the first quantum device is a transmitter of the quantum key distribution system and the second quantum device is a receiver of the quantum key distribution system is used for description. For details about steps performed by the first quantum device and the second quantum device in a quantum key distribution process, refer to the following method embodiment. For example, FIG. 6 is a schematic flowchart of a quantum key distribution method according to an embodiment of this application. As shown in FIG. 6, the method includes but is not limited to the following step 601 to step 603.

**Step 601**: A first quantum device generates a modulated optical signal, where the modulated optical signal carries quantum information and classical information, both the classical information and the quantum information are modulated on at least one polarization of the modulated optical signal, the modulated optical signal includes a plurality of subcarriers in different frequency segments, the classical information and the quantum information are on different subcarriers among the plurality of subcarriers, and the classical information includes quantum key agreement information.

Optionally, the modulated optical signal is from a same laser, that is, the modulated optical signal is obtained through modulation on laser light emitted from a laser. A frequency band spacing between the plurality of subcarriers in the modulated optical signal does not exceed one optical communication channel, to meet a requirement of the laser for a maximum modulation bandwidth. For example, one optical communication channel is 100 gigahertz (GHz), and a frequency band spacing between a plurality of subcarriers does not exceed one optical communication channel. To be specific, a difference between a largest frequency and a smallest frequency of the plurality of subcarriers is less than or equal to 100 GHz. It is clear that the optical communication channel may alternatively be greater than 100 GHz, and a size of the optical communication channel is not limited in this embodiment of this application. The quantum key agreement information may be classical information that needs to be transmitted by a data processing module in the quantum key distribution system (for example, the CV-QKD shown in FIG. 1).

Optionally, a general process in which the first quantum device generates the modulated optical signal is as follows: first generating a digital modulated signal in a preset format based on the obtained quantum information and the obtained classical information, then performing digital-to-analog conversion on the generated digital modulated signal to obtain an analog modulated signal, next performing signal adjustment processing on the analog modulated signal, and finally performing electro-optic modulation on an analog modulated signal obtained through signal adjustment processing, to obtain the modulated optical signal. The preset format used when the digital modulated signal is generated includes but is not limited to a preset frequency range of the quantum information, a preset frequency range of the classical information, and a digital modulation format used for the quantum information and the classical information. The digital modulation format used for the quantum information and the classical information is not limited in this embodiment of this application. There is no overlapping frequency between the preset frequency range of the quantum information and the preset frequency range of the classical information. In this embodiment of this application, a frequency range in which the quantum information in the generated analog modulated signal is located is referred to as a quantum signal frequency segment, and the quantum signal frequency segment is obtained through modulation based on the quantum information. A frequency range in which the classical information in the analog modulated signal is located is referred to as a classical signal frequency segment, and the classical signal frequency segment is obtained through modulation based on the classical information. When digital modulation is performed on the quantum information and the classical information, the quantum information and the classical information are modulated into different preset frequency ranges. Therefore, there is no overlapping frequency between the quantum signal frequency segment and the classical signal frequency segment in the analog modulated signal.

Optionally, the first quantum device may perform digital-to-analog conversion on the digital modulated signal by using one DAC, to obtain an analog modulated signal including both a quantum signal frequency segment and a classical signal frequency segment, and then further process the analog modulated signal to obtain the modulated optical signal. Alternatively, the first quantum device may perform DAC conversion on the digital modulated signal once by using two digital-to-analog converters separately, to respectively obtain an analog modulated signal (referred to as a first analog modulated signal below) including a quantum signal frequency segment and an analog modulated signal (referred to as a second analog modulated signal below) including a classical signal frequency segment, and then further process the first analog modulated signal and the second analog modulated signal to obtain the modulated optical signal. The following separately describes the two implementations.

In a first implementation, an implementation procedure in which the first quantum device generates the modulated optical signal is shown in FIG. 7, and includes but is not limited to the following step A1 to step A3.

**Step A1**: The first quantum device generates the analog modulated signal based on the quantum information and the classical information, where the analog modulated signal includes the quantum signal frequency segment and the classical signal frequency segment.

Optionally, the analog modulated signal includes one or more quantum signal frequency segments and one or more classical signal frequency segments. There is no overlapping frequency between the quantum signal frequency segment and the classical signal frequency segment in the analog modulated signal. At least one classical signal frequency segment carries the quantum key agreement information. There are a plurality of possible distribution positions of the quantum signal frequency segment and the classical signal frequency segment in the analog modulated signal. In this embodiment of this application, the following four possible cases are used as examples for description.

In a first possible case, the quantum signal frequency segment in the analog modulated signal is in a low frequency segment, and the classical signal frequency segment is in a high frequency segment. Optionally, the analog modulated signal includes one quantum signal frequency segment and two classical signal frequency segments. The quantum signal frequency segment ranges from 10 megahertz (MHz) to 1 GHz, one of the classical signal frequency segments ranges from 1.1 GHz to 10 GHz, and the other classical signal frequency segment ranges from 11 GHz to 20 Hz; or the quantum signal frequency segment ranges from 10 MHz to 10 GHz, one of the classical signal frequency segments ranges from 10.1 GHz to 20 GHz, and the other classical signal frequency segment ranges from 21 GHz to 80 Hz.

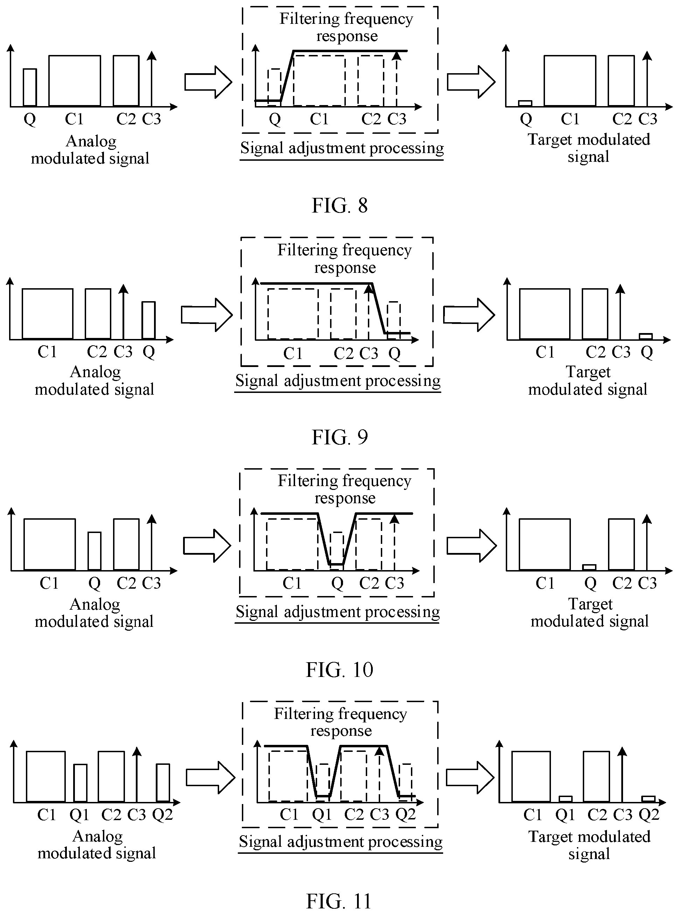

For example, FIG. 8 shows a distribution manner of a quantum signal frequency segment and a classical signal frequency segment in an analog modulated signal. As shown in FIG. 8, the analog modulated signal includes one quantum signal frequency segment Q and three classical signal frequency segments C1 to C3. The quantum signal frequency segment Q is in a low frequency segment, and the classical signal frequency segments C1 to C3 are in a high frequency segment.

In a second possible case, the quantum signal frequency segment in the analog modulated signal is in a high frequency segment, and the classical signal frequency segment is in a low frequency segment. Optionally, the analog modulated signal includes one quantum signal frequency segment and one classical signal frequency segment. The quantum signal frequency segment ranges from 10.1 GHz to 11 GHz, and the classical signal frequency segment ranges from 100 MHz to 10 GHz; the quantum signal frequency segment ranges from 50 GHz to 60 GHz, and the classical signal frequency segment ranges from 100 MHz to 40 GHz; or the like.

For example, FIG. 9 shows another distribution manner of a quantum signal frequency segment and a classical signal frequency segment in an analog modulated signal. As shown in FIG. 9, the analog modulated signal includes one quantum signal frequency segment Q and three classical signal frequency segments C1 to C3. The quantum signal frequency segment Q is in a high frequency segment, and the classical signal frequency segments C1 to C3 are in a low frequency segment.

In a third possible case, the analog modulated signal includes a plurality of classical signal frequency segments, and a quantum signal frequency segment is located between the plurality of classical signal frequency segments. For example, FIG. 10 shows still another distribution manner of a quantum signal frequency segment and a classical signal frequency segment in an analog modulated signal. As shown in FIG. 10, the analog modulated signal includes one quantum signal frequency segment Q and three classical signal frequency segments C1 to C3. The quantum signal frequency segment Q is located between the classical signal frequency segment C1 and the classical signal frequency segment C2.

In a fourth possible case, the analog modulated signal includes a plurality of classical signal frequency segments and a plurality of quantum signal frequency segments, and the plurality of quantum signal frequency segments and the plurality of classical signal frequency segments are alternately distributed. For example, FIG. 11 shows yet another distribution manner of a quantum signal frequency segment and a classical signal frequency segment in an analog modulated signal. As shown in FIG. 11, the analog modulated signal includes two quantum signal frequency segments Q1 and Q2 and three classical signal frequency segments C1 to C3. The classical signal frequency segment C1, the quantum signal frequency segment Q1, the classical signal frequency segment C2, the classical signal frequency segment C3, and the quantum signal frequency segment Q2 are sequentially arranged in ascending order of frequencies.

In the signals shown in FIG. 8 to FIG. 11, a horizontal coordinate is a frequency, and a vertical coordinate is an average amplitude of a signal frequency segment. In this embodiment of this application, an amplitude of the analog modulated signal mainly indicates an average power or average energy of a corresponding subcarrier in a frequency band after the analog modulated signal is converted into an optical signal. Optionally, an average amplitude of a signal frequency segment in the analog modulated signal may be an average value (average power density) or an integral (a sum of average powers in a frequency band) of the frequency band corresponding to the signal frequency segment in a power spectral density of the analog modulated signal. The amplitude may alternatively be average signal energy in one modulation periodicity, or average energy of one symbol. If the average amplitude of the signal frequency segment in the analog modulated signal is understood as an average amplitude of an analog electrical signal, a value of the average amplitude is always directly proportional to squares of values of the foregoing several expressions. Alternatively, when a precise value is not required and only identifying a trend of an amplitude in magnitude is needed, the average amplitude of the signal frequency segment in the analog modulated signal may be simply considered as a mean square voltage, a root mean square voltage, or a mean absolute voltage when a signal is converted back to a voltage in the signal frequency segment. When amplitudes of two signals are compared, if average powers of the two signals differ greatly, for example, differ by several orders of magnitude, the amplitudes of the signals are usually converted to be represented in decibels (dB). In this case, a difference between dB values of the amplitudes of the two signals has a direct conversion relationship with a multiple of the difference between the amplitudes of the signals. This is a common representation method in the field of electrical signals and optical signals.

**Step A2**: The first quantum device performs signal adjustment processing on the analog modulated signal, to obtain a target modulated signal, where a difference between an average amplitude of the classical signal frequency segment and an average amplitude of the quantum signal frequency segment in the target modulated signal is greater than a first amplitude threshold.

Optionally, when an amplitude of a signal is expressed in dB, if a value like an average power and/or an average power density is used to describe the amplitude of the signal, a ratio of the average amplitude of the classical signal frequency segment to the average amplitude of the quantum signal frequency segment may be selected as the first amplitude threshold. The first amplitude threshold is, for example, 10 dB. Optionally, a difference between an average amplitude of the classical signal frequency segment and an average amplitude (for example, expressed in dB) of the quantum signal frequency segment in the analog modulated signal is less than a second amplitude threshold, and the second amplitude threshold is less than the first amplitude threshold. In this embodiment of this application, the difference between the average amplitude of the classical signal frequency segment and the average amplitude of the quantum signal frequency segment in the generated analog modulated signal is relatively small, to ensure sampling accuracy of a DAC, so that a classical signal and a quantum signal each have a high signal-to-noise ratio. When the sampling accuracy of the DAC permits, the average amplitude of the quantum signal frequency segment in the analog modulated signal may be reduced.

FIG. 8 to FIG. 11 respectively show diagrams of performing signal adjustment processing on a plurality of analog modulated signals with different signal frequency segment distribution. The signal adjustment processing includes filtering processing, where a filtering frequency response is determined based on distribution of a quantum signal frequency segment and a classical signal frequency segment. The difference between the average amplitude of the classical signal frequency segment and the average amplitude of the quantum signal frequency segment in the target modulated signal is significantly greater than the difference between the average amplitude of the classical signal frequency segment and the average amplitude of the quantum signal frequency segment in the analog modulated signal.

In this embodiment of this application, two electrical modulated signals that are originally similar in amplitude and have similar signal-to-noise ratios but are in different frequency segments are changed to an electrical modulated signal with a high amplitude and an electrical modulated signal with a low amplitude in a filtering manner. Specifically, one DAC generates an analog modulated signal including a quantum signal frequency segment and a classical signal frequency segment, and then filtering processing is performed on the analog modulated signal, so that an average amplitude of the quantum signal frequency segment is significantly less than an average amplitude of the classical signal frequency segment. Usually, there is a significant difference between the average amplitude of the quantum signal frequency segment and the average amplitude of the classical signal frequency segment after filtering, and a maximum difference may even exceed 50 dB.

Optionally, in an implementation of step A2, the first quantum device performs filtering processing on the analog modulated signal by using a filter, to obtain the target modulated signal, where the quantum signal frequency segment is in a first frequency band of the filter, the classical signal frequency segment is in a second frequency band of the filter, and frequency attenuation of the first frequency band is greater than frequency attenuation of the second frequency band.

In this implementation, signal adjustment processing on the analog modulated signal is implemented by using one filter. A frequency response function of the filter is designed to be related to distribution of the quantum signal frequency segment and the classical signal frequency segment in the analog modulated signal. In this way, frequency attenuation of a frequency band formed by the filter for the quantum signal frequency segment is relatively large, where a function of the frequency band is similar to that of a stopband of the filter; and frequency attenuation of a frequency band formed by the filter for the classical signal frequency segment is relatively small, where a function of the frequency band is similar to that of a passband of the filter. Frequency attenuation of frequency bands in the filter may be set based on an actual requirement, provided that the difference between the average amplitude of the classical signal frequency segment and the average amplitude of the quantum signal frequency segment in the modulated signal obtained through filtering processing meets a specified requirement.

Optionally, in addition to directly designing one filter to perform signal adjustment processing on the analog modulated signal, a signal adjustment effect may alternatively be achieved in a manner of first performing splitting, then separately performing filtering and attenuation, and next performing combining, so that the difference between the average amplitude of the classical signal frequency segment and the average amplitude of the quantum signal frequency segment in the finally obtained target modulated signal is greater than the first amplitude threshold. In a splitting filtering manner, a flatter frequency response is more easily formed in a passband and a stopband, thereby reducing digital signal processing difficulty. Specifically, another implementation of step A2 includes the following step A21 to step A24.

**Step A21**: The first quantum device performs splitting processing on the analog modulated signal based on distribution areas of the quantum signal frequency segment and the classical signal frequency segment in the analog modulated signal, to obtain a plurality of split signals.

A quantity of split signals may be a sum of a quantity of distribution areas of the quantum signal frequency segment and a quantity of distribution areas of the classical signal frequency segment. One distribution area of the quantum signal frequency segment may include one or more adjacent quantum signal frequency segments. One distribution area of the classical signal frequency segment may include one or more adjacent classical signal frequency segments. For example, refer to FIG. 8. A quantity of distribution areas of the quantum signal frequency segment in the analog modulated signal is 1 (including the quantum signal frequency segment Q), and a quantity of distribution areas of the classical signal frequency segments is also 1 (including the classical signal frequency segments C1 to C3). Correspondingly, the first quantum device may split the analog modulated signal into two split signals by using a splitter. For another example, refer to FIG. 10. A quantity of distribution areas of the quantum signal frequency segment in the analog modulated signal is 1 (including the quantum signal frequency segment Q), and a quantity of distribution areas of the classical signal frequency segments is 2 (one of the distribution areas includes the classical signal frequency segment C1, and the other distribution area includes the classical signal frequency segments C2 and C3). Correspondingly, the first quantum device may split the analog modulated signal into three split signals by using a splitter.

Optionally, amplitudes of the plurality of split signals may be the same or may be different.

**Step A22**: The first quantum device separately performs filtering processing on the plurality of split signals by using a plurality of filters, to obtain one or more quantum filtered signals and one or more classical filtered signals, where each quantum filtered signal includes one or more adjacent quantum signal frequency segments, and each classical filtered signal includes one or more adjacent classical signal frequency segments.

Optionally, like the original analog modulated signal, the split signal also includes the quantum signal frequency segment and the classical signal frequency segment, and filtering processing is performed on the split signal by using the filter, so that a split signal obtained through filtering processing includes only the quantum signal frequency segment or only the classical signal frequency segment. In this way, the quantum filtered signal and the classical filtered signal can be obtained. For example, for the analog modulated signal shown in FIG. 8, filtering processing is performed on one of the split signals by using a low-pass filter, to obtain a quantum filtered signal, where the quantum filtered signal includes the quantum signal frequency segment Q; and filtering processing is performed on the other split signal by using a high-pass filter, to obtain a classical filtered signal, where the classical filtered signal includes the classical signal frequency segments C1 to C3.

**Step A23**: The first quantum device attenuates the one or more quantum filtered signals.

Attenuation processing is performed on the quantum filtered signal, thereby reducing an amplitude of the quantum filtered signal.

**Step A24**: The first quantum device performs combining processing on all the classical filtered signals and all the attenuated quantum filtered signals, to obtain the target modulated signal.

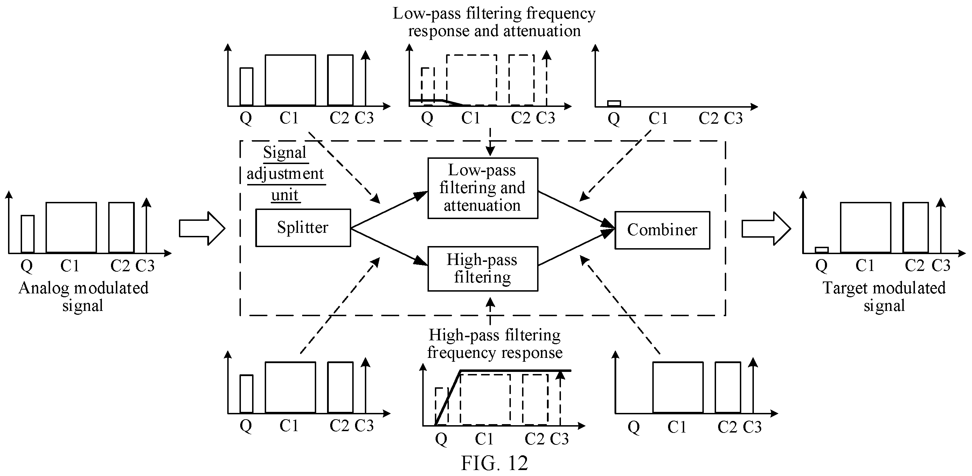

The following describes an implementation procedure of step A21 to step A24 by using an example in which the quantum signal frequency segment is in the low frequency segment and the classical signal frequency segment is in the high frequency segment (which correspond to the first possible case in step A1). For example, FIG. 12 is a diagram of performing signal adjustment processing on an analog modulated signal according to an embodiment of this application. As shown in FIG. 12, the analog modulated signal includes one quantum signal frequency segment Q and three classical signal frequency segments C1 to C3. The quantum signal frequency segment Q is in a low frequency segment, and the classical signal frequency segments C1 to C3 are in a high frequency segment. After entering a signal adjustment unit, the analog modulated signal is first split by a splitter into two split signals, where amplitudes of the two output split signals may be the same or may be different.

Refer to FIG. 12. Assuming that an upper output of the splitter is a quantum signal channel, the channel passes through a low-pass filter and has appropriate attenuation. Through low-pass filtering and attenuation, an amplitude of the quantum signal frequency segment in the low frequency segment is attenuated to some extent, and an amplitude of the classical signal frequency segment in the high frequency segment is attenuated to a greater extent. Attenuation is added to ensure that an output amplitude of the quantum signal frequency segment meets a prespecified requirement. In addition, if a system sets a finally output quantum signal amplitude to be far less than a classical signal amplitude, the low-pass filtering on the quantum signal channel may be omitted. This is because an amplitude of a classical signal frequency segment on the quantum signal channel is far less than an amplitude of a classical signal frequency segment on a classical signal channel, and the amplitude of the classical signal frequency segment on the quantum signal channel and the amplitude of the classical signal frequency segment on the classical signal channel have little impact after combining.

Still refer to FIG. 12. If a lower output of the splitter is the classical signal channel, the channel passes through a high-pass filter. Through high-pass filtering, the quantum signal frequency segment in the low frequency segment is almost filtered out, and the classical signal frequency segments in the high frequency segment pass through the high-pass filter with higher amplitudes. If the high-pass filter is an active filter, a specific gain may be generated for the amplitude of the classical signal frequency segment.

A final objective of performing low-pass filtering and attenuation on the quantum signal channel and performing high-pass filtering on the classical signal channel is to cause an average amplitude of a quantum signal frequency segment in a signal (that is, a quantum filtered signal obtained through attenuation processing) output on the quantum signal channel to be far less than an average amplitude of a classical signal frequency segment in a signal (that is, a classical filtered signal) output on the classical signal channel.

Still refer to FIG. 12. The signal output on the quantum signal channel and the signal output on the classical signal channel are combined by a combiner, to finally obtain a target modulated signal. In the target modulated signal, an average amplitude of the quantum signal frequency segment in a low frequency segment is significantly less than an average amplitude of the classical signal frequency segment in the high frequency segment.

Optionally, when an unbalanced directional coupler is used as the splitter, an amplitude ratio between output channels of the splitter may not be around 50:50, and may even reach a very different amplitude ratio like 1:99. In this case, an output channel with a high beam splitting ratio (for example, 99%) may be selected as the classical signal channel, and an output channel with a low beam splitting ratio (for example, 1%) may be selected as the quantum signal channel. In this case, only a low-pass filter needs to be added to the quantum signal channel, and no additional attenuator is needed.

Optionally, the splitter may alternatively be replaced with another device (which may be referred to as a circuit duplexer) having a splitting function. For an input signal including a plurality of frequency segments, the circuit duplexer may output signals respectively including different frequency segments. This function is similar to that of an optical wavelength demultiplexer. The circuit duplexer may be used as a frequency demultiplexer for a circuit signal. For example, a first output of the circuit duplexer includes only a low-frequency segment signal, which is equivalent to the common splitter and the low-pass filter in the solution shown in FIG. 12; and a second output includes only a high-frequency segment signal, which is equivalent to the common splitter and the high-pass filter in the solution shown in FIG. 12. In the solution shown in FIG. 12, if the circuit duplexer is used to replace the common splitter in the signal adjustment unit, a low-frequency output channel of the circuit duplexer is selected as the quantum signal channel, and in this case, the low-pass filter may not be added to the quantum signal channel, and only appropriate attenuation needs to be added; and a high-frequency output channel of the circuit duplexer is selected as the classical signal channel, and in this case, the high-pass filter may not be added to the classical signal channel. It is clear that, if a filtering effect of the circuit duplexer is not good enough, corresponding filters may be further added to the quantum signal channel and the classical signal channel, but requirements on the filters are reduced.

Optionally, when the quantum signal frequency segment in the analog modulated signal is in the high frequency segment and the classical signal frequency segment is in the low frequency segment (which correspond to the second possible case in step A1), for an implementation process of performing filtering processing on the analog modulated signal, refer to the implementation process shown in FIG. 12. Internal structures of signal adjustment units are the same. A difference lies in that in this case, after a splitter, a high-pass filter and attenuation are added to a quantum signal channel, and a low-pass filter is added to a classical signal channel.

Optionally, when the analog modulated signal includes the plurality of classical signal frequency segments and the quantum signal frequency segment is located between the plurality of classical signal frequency segments (which correspond to the third possible case in step A1), for an implementation process of performing filtering processing on the analog modulated signal, refer to the implementation process shown in FIG. 12. Internal structures of signal adjustment units are the same. A difference lies in that in this case, after a splitter, a band-pass filter and attenuation are added to a quantum signal channel, and a band-stop filter is added to a classical signal channel.

Optionally, when the analog modulated signal includes the plurality of classical signal frequency segments and the plurality of quantum signal frequency segments, and the plurality of quantum signal frequency segments and the plurality of classical signal frequency segments are alternately distributed (which correspond to the fourth possible case in step A1), for an implementation process of performing filtering processing on the analog modulated signal, refer to the implementation process shown in FIG. 12. Internal structures of signal adjustment units are still similar. However, considering that it is relatively difficult to design and manufacture a band-pass filter and a band-stop filter for a plurality of frequency segments, a manner of performing splitting to obtain a plurality of channels and then performing combining may be selected. Each channel corresponds to one or more adjacent quantum signal frequency segments, or one or more adjacent classical signal frequency segments. For a channel for a quantum signal frequency segment, a combination of band-pass filtering and attenuation is used. For a channel for a classical signal frequency segment, a band-pass filter is used. Finally, the channels are combined together.

**Step A3**: The first quantum device performs electro-optic modulation on the target modulated signal, to obtain the modulated optical signal.

Each subcarrier in the modulated optical signal corresponds to one quantum signal frequency segment or one classical signal frequency segment in the analog modulated signal generated in step A1. One subcarrier may be an optical signal. Like the analog modulated signal, the target modulated signal includes one or more quantum signal frequency segments and one or more classical signal frequency segments. Correspondingly, the modulated optical signal obtained through electro-optic modulation on the target modulated signal includes the one or more quantum optical signals and the one or more classical optical signals. In the modulated optical signal, power strength of the quantum optical signal is far weaker than power strength of the classical optical signal.

In this implementation, signal adjustment processing is performed on the analog modulated signal including the quantum signal frequency segment and the classical signal frequency segment, so that the difference between the average amplitude of the quantum signal frequency segment and the average amplitude of the classical signal frequency segment in the adjusted target modulated signal meets a specified requirement. In this way, in the modulated optical signal obtained through modulation based on the target modulated signal, the power strength of the quantum optical signal can be far weaker than the power strength of the classical optical signal, thereby meeting transmission performance requirements of the quantum optical signal and the classical optical signal.

In the implementation in which the first quantum device generates the modulated optical signal shown in FIG. 7, a transmitter of quantum key distribution, the first quantum device may emit an optical signal by using one laser, generate an analog modulated signal by using one DAC, and finally modulate, by using one electro-optic modulator, an analog modulated signal obtained through signal modulation processing on the optical signal emitted from the laser, to obtain a to-be-transmitted modulated optical signal. The first quantum device needs one laser, one DAC, and one electro-optic modulator for generating the modulated optical signal, so that hardware costs are low.

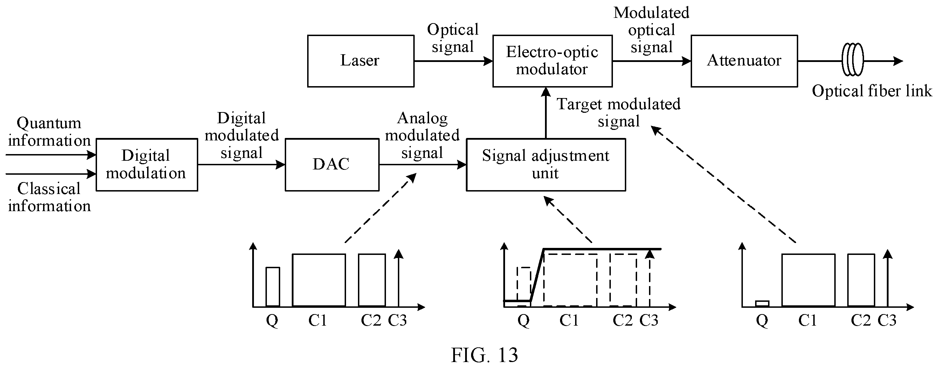

For example, FIG. 13 is a diagram of a process of generating a modulated optical signal according to an embodiment of this application. As shown in FIG. 13, first, a digital modulated signal is generated in a preset format based on obtained quantum information and classical information. The quantum information and the classical information are modulated into different frequency ranges of the digital modulated signal. An example in which modulation frequency segments selected for the quantum information and the classical information are shown in FIG. 8 is used herein. Specifically, a digital signal including the quantum information and the classical information may be converted into the digital modulated signal by using a digital signal processing algorithm. The digital signal processing algorithm usually includes a frequency shift, upsampling, pulse shaping, pre-compensation, and the like. Then, the digital modulated signal passes through a DAC to form an analog modulated signal. Then, the analog modulated signal passes through a signal adjustment unit to form a target modulated signal. For an implementation procedure of this process, refer to step A2. Then, the target modulated signal is usually added to an electrical input port of an electro-optic modulator after passing through a power amplifier (not shown in the figure). In this case, output light from a laser enters an optical input port of the electro-optic modulator, and a modulated optical signal is output after an optical signal passes through the electro-optic modulator. The modulated optical signal carries information about the target modulated signal. Finally, the modulated optical signal is transmitted via an optical fiber link after passing through an attenuator. The attenuator is configured to adjust an output power of the modulated optical signal, so that the modulated optical signal reaches a predetermined optical power level.

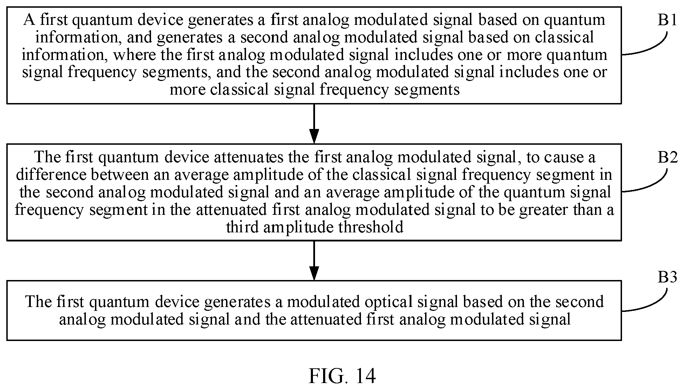

In a second implementation, an implementation procedure in which the first quantum device generates the modulated optical signal is shown in FIG. 14, and includes but is not limited to the following step B1 to step B3.

**Step B1**: The first quantum device generates a first analog modulated signal based on the quantum information, and generates a second analog modulated signal based on the classical information, where the first analog modulated signal includes one or more quantum signal frequency segments, and the second analog modulated signal includes one or more classical signal frequency segments.

There is no overlapping frequency between the quantum signal frequency segment in the first analog modulated signal and the classical signal frequency segment in the second analog modulated signal. For frequency segment selection for the quantum signal frequency segment and the classical signal frequency segment, refer to related descriptions in step A1, for example, the four possible cases described in step A1. Details are not described in this embodiment of this application again.

Optionally, the first analog modulated signal and the second analog modulated signal are respectively generated by different DACs. In this implementation, two DACs may be selected to generate analog modulated signals. One of the DACs modulates only a quantum signal, and specifically, performs sampling on only a frequency range in which the quantum information in the digital modulated signal is located. In this case, an analog modulated signal (that is, the first analog modulated signal) output by the DAC includes only a quantum signal frequency segment, and only some sampling background noise of the DAC exists in a classical signal frequency segment. The other DAC modulates only a classical signal, and specifically, performs sampling on only a frequency range in which the classical information in the digital modulated signal is located. In this case, an analog modulated signal (that is, the second analog modulated signal) output by the DAC includes only a classical signal frequency segment, and sampling background noise of the DAC mainly exists in a quantum signal frequency segment.

In this implementation, because the quantum signal and the classical signal are respectively modulated by using different DACs, sampling accuracy of the quantum signal and the classical signal can be respectively ensured, so that the classical signal and the quantum signal each have a high signal-to-noise ratio.

**Step B2**: The first quantum device attenuates the first analog modulated signal, to cause a difference between an average amplitude of the classical signal frequency segment in the second analog modulated signal and an average amplitude of the quantum signal frequency segment in the attenuated first analog modulated signal to be greater than a third amplitude threshold.

Attenuation processing is performed on the first analog modulated signal, thereby reducing an amplitude of the first analog modulated signal, that is, reducing the average amplitude of the quantum signal frequency segment in the first analog modulated signal. Optionally, the third amplitude threshold is the same as the first amplitude threshold in step A2, for example, is 10 dB.

**Step B3**: The first quantum device generates the modulated optical signal based on the second analog modulated signal and the attenuated first analog modulated signal.

Each subcarrier in the modulated optical signal corresponds to one quantum signal frequency segment in the first analog modulated signal or one classical signal frequency segment in the second analog modulated signal.

Optionally, the first quantum device may further perform filtering processing on the second analog modulated signal, and then generate the modulated optical signal based on the second analog modulated signal obtained through filtering processing and the attenuated first analog modulated signal. In this way, sampling background noise of the DAC at a position of a quantum signal frequency segment in the second analog modulated signal may be further suppressed, to avoid affecting signal quality of a subcarrier corresponding to the quantum signal frequency segment in the modulated optical signal. For an implementation of performing filtering processing on the second analog modulated signal, refer to the filtering processing manner of the analog modulated signal in step A2. Specifically, a corresponding filter may be designed based on quantities and an arrangement manner of quantum signal frequency segments and classical signal frequency segments. For example, when all quantum signal frequency segments are in a low frequency segment, a high-pass filter is selected as a filter; when all quantum signal frequency segments are in a high frequency segment, a low-pass filter is selected as a filter; or when one or more quantum signal frequency segments are located between a plurality of classical signal frequency segments, a band-stop filter or a multi-stopband filter is selected as a filter. It is clear that, if the sampling background noise of the DAC in the second analog modulated signal is extremely small, impact on quality of a signal at the position of the quantum signal frequency segment after combining may be ignored. In this case, filtering processing may not be performed on the second analog modulated signal.

In this implementation, attenuation processing is performed on the first analog modulated signal including the quantum signal frequency segment, so that the difference between the average amplitude of the quantum signal frequency segment in the attenuated first analog modulated signal and the average amplitude of the classical signal frequency segment in the second analog modulated signal meets a specified requirement. In this way, in the modulated optical signal obtained through final modulation, power strength of a quantum optical signal can be far weaker than power strength of a classical optical signal, thereby meeting transmission performance requirements of the quantum optical signal and the classical optical signal.

Optionally, in an implementation of step B3, the first quantum device performs combining processing on the second analog modulated signal and the attenuated first analog modulated signal, to obtain a combined analog modulated signal; and the first quantum device performs electro-optic modulation based on the combined analog modulated signal, to obtain the modulated optical signal. In this implementation, as a transmitter of quantum key distribution, the first quantum device may emit an optical signal by using one laser, and generate two analog modulated signals by using two DACs. Then, after performing attenuation processing on one of the analog modulated signals that includes a quantum signal frequency segment, the first quantum device performs combining on one analog modulated signal obtained through attenuation processing and the other analog modulated signal including a classical signal frequency segment. Finally, the first quantum device modulates, by using one electro-optic modulator, a combined analog modulated signal on the optical signal emitted from the laser, to obtain a to-be-transmitted modulated optical signal. The first quantum device needs one laser, one electro-optic modulator, and two DACs for generating the modulated optical signal, so that hardware costs are low.

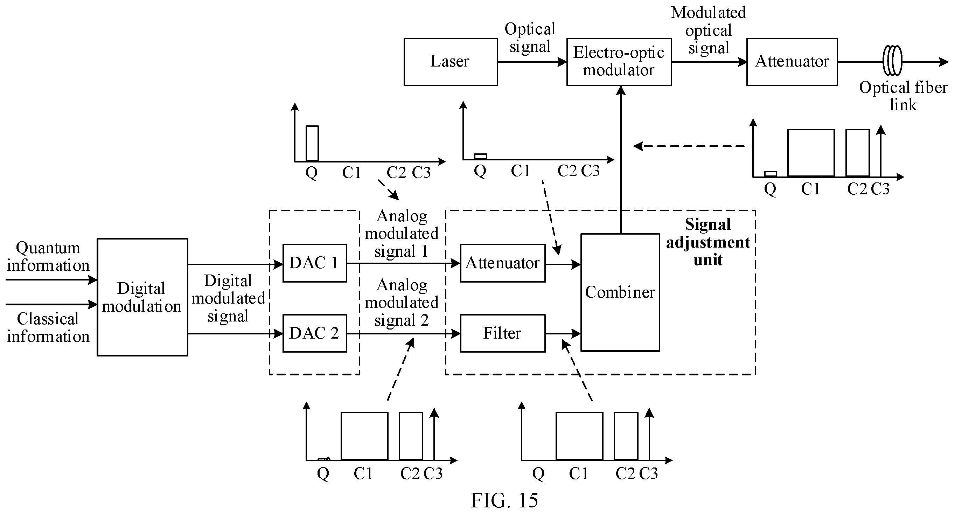

For example, FIG. 15 is another diagram of a process of generating a modulated optical signal according to an embodiment of this application. As shown in FIG. 15, first, a digital modulated signal is generated in a preset format based on obtained quantum information and classical information. The quantum information and the classical information are modulated into different frequency ranges of the digital modulated signal. An example in which modulation frequency segments selected for the quantum information and the classical information are shown in FIG. 8 is used herein. Specifically, a digital signal including the quantum information and the classical information may be converted into the digital modulated signal by using a digital signal processing algorithm. The digital signal processing algorithm usually includes a frequency shift, upsampling, pulse shaping, pre-compensation, and the like. Then, the digital modulated signal passes through a DAC 1 to form an analog modulated signal 1 including a quantum signal frequency segment, and the digital modulated signal passes through a DAC 2 to form an analog modulated signal 2 including a classical signal frequency segment. Then, the analog modulated signal 1 arrives at a combiner after passing through an attenuator in a signal adjustment unit, and the analog modulated signal 2 arrives at the combiner after passing through a filter in the signal adjustment unit. Then, a modulated signal output by the combiner is usually added to an electrical input port of an electro-optic modulator after passing through a power amplifier (not shown in the figure). In this case, output light from a laser enters an optical input port of the electro-optic modulator, and a modulated optical signal is output after an optical signal passes through the electro-optic modulator. The modulated optical signal carries information about the modulated signal output by the combiner. Finally, the modulated optical signal is transmitted via an optical fiber link after passing through an attenuator. The attenuator is configured to adjust an output power of the modulated optical signal, so that the modulated optical signal reaches a predetermined optical power level.

Optionally, in another implementation of step B3, the first quantum device performs, by using a first electro-optic modulator, electro-optic modulation on the attenuated first analog modulated signal, to obtain a first optical signal; the first quantum device performs, by using a second electro-optic modulator, electro-optic modulation on the second analog modulated signal, to obtain a second optical signal; and the first quantum device performs beam combining processing on the first optical signal and the second optical signal, to obtain the modulated optical signal. In this implementation, as a transmitter of quantum key distribution, the first quantum device may emit an optical signal by using one laser, split the optical signal into two optical signals by using an optical beam splitter, and generate two analog modulated signals by using two DACs. Then, after performing attenuation processing on one of the analog modulated signals that includes a quantum signal frequency segment, the first quantum device modulates, by using one of electro-optic modulators, one analog modulated signal obtained through attenuation processing on one of the optical signals from the laser, and modulates, by using the other electro-optic modulator, the other analog modulated signal including a classical signal frequency segment on the other optical signal from the laser. Finally, the first quantum device performs beam combining on two modulated optical signals by using an optical beam combiner, to obtain a to-be-transmitted modulated optical signal. The first quantum device needs one laser, two DACs, and two electro-optic modulators for generating the modulated optical signal, so that hardware costs are low. Strength of the two optical signals output by the optical beam splitter may be similar or may be different. For example, light for modulating the analog modulated signal including the quantum signal frequency segment may be weaker.

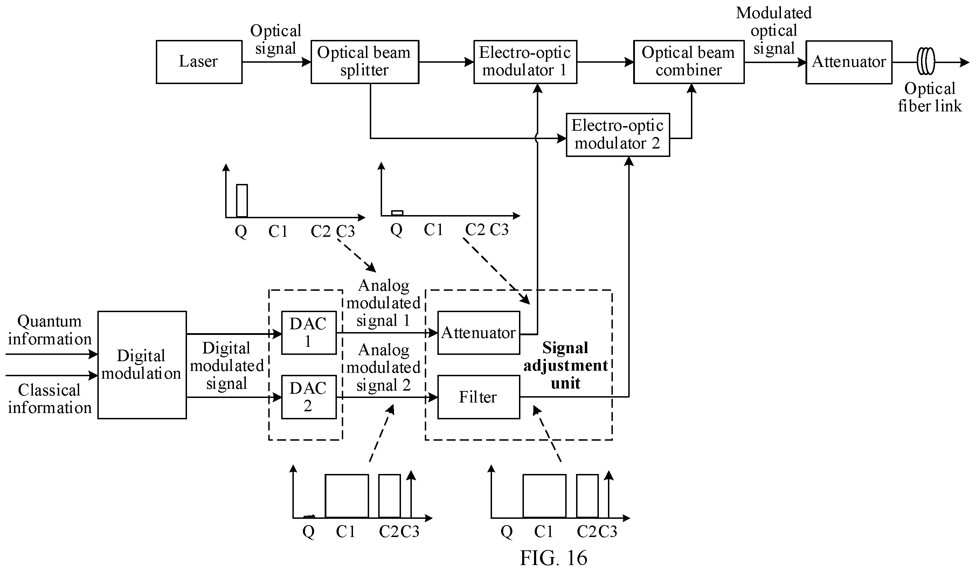

For example, FIG. 16 is a diagram of still another process of generating a modulated optical signal according to an embodiment of this application. As shown in FIG. 16, first, a digital modulated signal is generated in a preset format based on obtained quantum information and classical information. The quantum information and the classical information are modulated into different frequency ranges of the digital modulated signal. An example in which modulation frequency segments selected for the quantum information and the classical information are shown in FIG. 8 is used herein. Specifically, a digital signal including the quantum information and the classical information may be converted into the digital modulated signal by using a digital signal processing algorithm. The digital signal processing algorithm usually includes a frequency shift, upsampling, pulse shaping, pre-compensation, and the like. Then, the digital modulated signal passes through a DAC 1 to form an analog modulated signal 1 including a quantum signal frequency segment, and the digital modulated signal passes through a DAC 2 to form an analog modulated signal 2 including a classical signal frequency segment. Then, the analog modulated signal 1 is output to an electrical input port of an electro-optic modulator 1 after passing through an attenuator in a signal adjustment unit, and the analog modulated signal 2 is output to an electrical input port of an electro-optic modulator 2 after passing through a filter in the signal adjustment unit. In this case, after passing through an optical beam splitter, output light from a laser is split into two optical signals, and the two optical signals respectively enter optical input ports of the electro-optic modulator 1 and the electro-optic modulator 2. One of the optical signals is modulated by the electro-optic modulator 1 and then is output to an optical beam combiner, where the modulated optical signal carries information about the analog modulated signal 1. The other optical signal is modulated by the electro-optic modulator 2 and then is output to the optical beam combiner, where the modulated optical signal carries information about the analog modulated signal 2. Then, the optical beam combiner performs beam combining processing on the two modulated optical signals, to obtain a modulated optical signal. Finally, the modulated optical signal is transmitted via an optical fiber link after passing through an attenuator. The attenuator is configured to adjust an output power of the modulated optical signal, so that the modulated optical signal reaches a predetermined optical power level.

Optionally, there are two common manners of modulating a signal into a frequency segment of a specific subcarrier. In one manner, a frequency shift on the signal is performed in digital domain, where a frequency shift amount is a characteristic frequency (generally a center frequency) of the corresponding carrier; and then the signal is converted by a DAC into an analog signal of the corresponding subcarrier. In other words, a carrier of a subcarrier band is directly modulated and generated by the DAC. In the manner, there are high requirements on a bandwidth and a sampling rate of the DAC. In the other manner, frequency shift processing is not performed in digital domain and a DAC directly generates a baseband modulated signal (or a minor frequency shift is performed to avoid noise near a direct current); and then the baseband modulated signal passes through a frequency mixer together with another analog local oscillator (quasi-single-tone sine local oscillator), and is frequency-shifted to the frequency band of the corresponding subcarrier. In both the two manners, a subcarrier modulated signal can be generated in this application.

**Step 602**: The first quantum device sends the modulated optical signal to a second quantum device via an optical fiber link.

The quantum information and the quantum key agreement information are used by the first quantum device and the second quantum device to jointly generate a same quantum key.

Further, after receiving, via an optical fiber link, the modulated optical signal sent by the first quantum device, the second quantum device continues to perform the following step 603.

**Step 603**: The second quantum device obtains the quantum information and the classical information based on the modulated optical signal.

Further, the second quantum device may perform data processing based on the quantum key agreement information in the obtained classical information, and generate, based on the obtained quantum information, the quantum key that is the same as that of the first quantum device. For implementation of this process, refer to related steps shown in FIG. 1. Details are not described in this embodiment of this application again.

Optionally, a first implementation of step 603 includes the following step C1 to step C3.

**Step C1**: The second quantum device converts the received modulated optical signal into an analog signal by using a coherent detector, where the analog signal includes a quantum signal frequency segment and a classical signal frequency segment.

There is no overlapping frequency between the quantum signal frequency segment and the classical signal frequency segment, the quantum signal frequency segment corresponds to a subcarrier that carries the quantum information and that is in the modulated optical signal, and the classical signal frequency segment corresponds to a subcarrier that carries the classical information and that is in the modulated optical signal. If the modulated optical signal is generated by using step A1 to step A3, frequency distribution of the quantum signal frequency segment and the classical signal frequency segment in the analog signal herein is the same as frequency distribution of the quantum signal frequency segment and the classical signal frequency segment in the analog modulated signal in step A1. Alternatively, if the modulated optical signal is generated by using step B1 to step B3, frequency distribution of the quantum signal frequency segment in the analog signal herein is the same as frequency distribution of the quantum signal frequency segment in the first analog modulated signal in step B1, and frequency distribution of the classical signal frequency segment in the analog signal is the same as frequency distribution of the classical signal frequency segment in the second analog modulated signal in step B1.

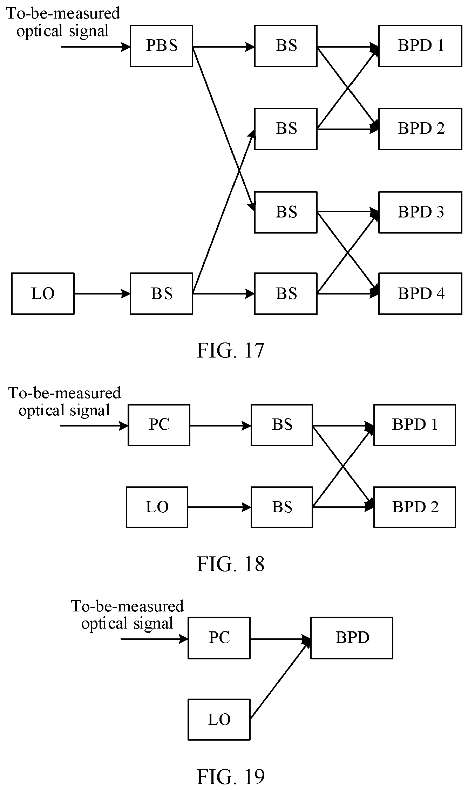

In a first possible implementation, the coherent detector is a conventional coherent receiving machine. For example, FIG. 17 is a diagram of a structure of a coherent receiving machine according to an embodiment of this application. As shown in FIG. 17, the coherent receiving machine includes a polarization beam splitter (polarization beam splitter, PBS), a plurality of beam splitters (beam splitters, BSs), and four balanced photodetectors (balanced photodetectors, BPDs). The four BPDs are a BPD 1 to a BPD 4. After entering the coherent receiving machine, a to-be-measured optical signal is first split by the PBS into two optical signals, so that an X-polarization optical signal and a Y-polarization optical signal are obtained. The X-polarization optical signal is split into two optical signals after entering a BS, and the two outputs respectively enter the BPD 1 and the BPD 2. The BPD 1 and the BPD 2 respectively measure an I component and a Q component of the X-polarization optical signal based on a delay difference of local oscillator light. When a quantum optical signal is measured, an I component of the quantum optical signal is usually referred to as an x regular component and a Q component is referred to as a p regular component in the industry. Similarly, the Y-polarization optical signal is split into two optical signals after entering a BS, and the two outputs respectively enter the BPD 3 and the BPD 4. The BPD 3 and the BPD 4 respectively measure an I component (x regular component) and a Q component (p regular component) of the Y-polarization optical signal based on the delay difference of the local oscillator light. To make the BPDs work, the coherent receiving machine further needs a local oscillator (local oscillator, LO) to provide the local oscillator light. The local oscillator light is split by two levels of BSs into four beams of light, and the four beams of light respectively enter the BPD 1 to the BPD 4. A phase difference between each of two beams of light respectively entering the BPD 1 and the BPD 2 and an optical signal on a corresponding channel is about 90 degrees, and a phase difference between each of two beams of light respectively entering the BPD 3 and the BPD 4 and an optical signal on a corresponding channel is about 90 degrees.

In a second possible implementation, the coherent detector is a single polarization receiving machine. The single polarization receiving machine receives a signal on only one polarization, and is usually used in a scenario in which a transmitter transmits only a single polarization signal. For example, FIG. 18 is a diagram of a structure of a single polarization receiving machine according to an embodiment of this application. As shown in FIG. 17, the single polarization receiving machine includes a polarization controller (polarization controller, PC), a plurality of BSs, and two BPDs. The two BPDs are a BPD 1 and a BPD 2. After entering the single polarization receiving machine, a to-be-measured optical signal is first rotated by the PC to a specific polarization state, and then is split by a BS into two optical signals. The two outputs respectively enter the BPD 1 and the BPD 2. The BPD 1 and the BPD 2 each measure an I component and a Q component of a polarization optical signal entering the BPD based on a delay difference of local oscillator light. Similarly, the single polarization receiving machine further needs a local oscillator to provide the local oscillator light. The local oscillator light is split by a BS into two beams of light, and the two beams of light respectively enter the BPD 1 and the BPD 2.

In a third possible implementation, the coherent detector may receive an optical signal by using only one BPD. For example, FIG. 19 is a diagram of a structure of a coherent detector according to an embodiment of this application. As shown in FIG. 19, the coherent detector includes a PC and one BPD. After entering the coherent detector, a to-be-measured optical signal is first rotated by the PC to a specific polarization state, and then enters the BPD. The BPD measures an I component and a Q component of a polarization optical signal entering the BPD based on a delay difference of local oscillator light. Similarly, the coherent detector further needs a local oscillator to provide the local oscillator light, for the local oscillator light to enter the BPD.

All output signals of the BPD in the coherent detector are analog signals obtained by the coherent detector through conversion.

**Step C2**: The second quantum device performs received signal adjustment processing on the analog signal, to obtain a target signal.

A difference between an average amplitude of the classical signal frequency segment and an average amplitude of the quantum signal frequency segment in the target signal is less than an amplitude threshold. In an optical signal received by a receiver, a quantum optical signal is much weaker than a classical optical signal. Therefore, if an analog-to-digital converter (analog-to-digital converter, ADC) is directly used to perform sampling on the analog signal output by the coherent detector without adjustment, sampling noise in a quantum signal frequency segment corresponding to the quantum optical signal in the analog signal is large, affecting system performance. Received signal adjustment processing is performed on the analog signal, so that an average amplitude of a quantum signal frequency segment corresponding to a quantum optical signal is approximately similar to an average amplitude of a classical signal frequency segment corresponding to a classical optical signal in an adjusted analog signal (that is, the target signal). In this way, sampling accuracy of the ADC can be fully used, thereby reducing sampling noise in the quantum signal frequency segment corresponding to the quantum optical signal, thereby mitigating losses of system performance as much as possible.

Optionally, in an implementation of step C2, the second quantum device performs filtering processing on the analog signal by using a filter, to obtain the target signal, where the quantum signal frequency segment is in a first frequency band of the filter, the classical signal frequency segment is in a second frequency band of the filter, and frequency attenuation of the first frequency band is less than frequency attenuation of the second frequency band.

In this implementation, signal adjustment processing on the analog signal is implemented by using one filter. A frequency response function of the filter is designed to be related to distribution of the quantum signal frequency segment and the classical signal frequency segment in the analog signal. In this way, frequency attenuation of a frequency band formed by the filter for the quantum signal frequency segment is relatively small, where a function of the frequency band is similar to that of a passband of the filter; and frequency attenuation of a frequency band formed by the filter for the classical signal frequency segment is relatively large, where a function of the frequency band is similar to that of a stopband of the filter. Frequency attenuation of frequency bands in the filter may be set according to an actual requirement, provided that the average amplitude of the classical signal frequency segment and the average amplitude of the quantum signal frequency segment in the target signal obtained through filtering processing are similar.

Optionally, in addition to directly designing one filter to perform received signal adjustment processing on the analog signal, a signal adjustment effect may alternatively be achieved in a manner of first performing splitting, then separately performing filtering and attenuation, and next performing combining, so that the difference between the average amplitude of the classical signal frequency segment and the average amplitude of the quantum signal frequency segment in the finally obtained target signal is less than the set amplitude threshold. In a splitting filtering manner, a flatter frequency response is more easily formed in a passband and a stopband, thereby reducing digital signal processing difficulty. Specifically, another implementation of step C2 includes the following step C21 to step C24.

**Step C21**: The second quantum device performs splitting processing on the analog signal based on distribution areas of the quantum signal frequency segment and the classical signal frequency segment in the analog signal, to obtain a plurality of split signals.

For an implementation of step C21, refer to step A21. Details are not described herein again in this embodiment of this application.

**Step C22**: The second quantum device separately performs filtering processing on the plurality of split signals by using a plurality of filters, to obtain one or more quantum filtered signals and one or more classical filtered signals, where each quantum filtered signal includes one or more adjacent quantum signal frequency segments, and each classical filtered signal includes one or more adjacent classical signal frequency segments.

For an implementation of step C22, refer to step A22. Details are not described herein again in this embodiment of this application.

**Step C23**: The second quantum device attenuates the one or more classical filtered signals.

Attenuation processing is performed on the classical filtered signal, thereby reducing an amplitude of the classical filtered signal.

**Step C24**: The second quantum device performs combining processing on all the quantum filtered signals and all the attenuated classical filtered signals, to obtain the target signal.

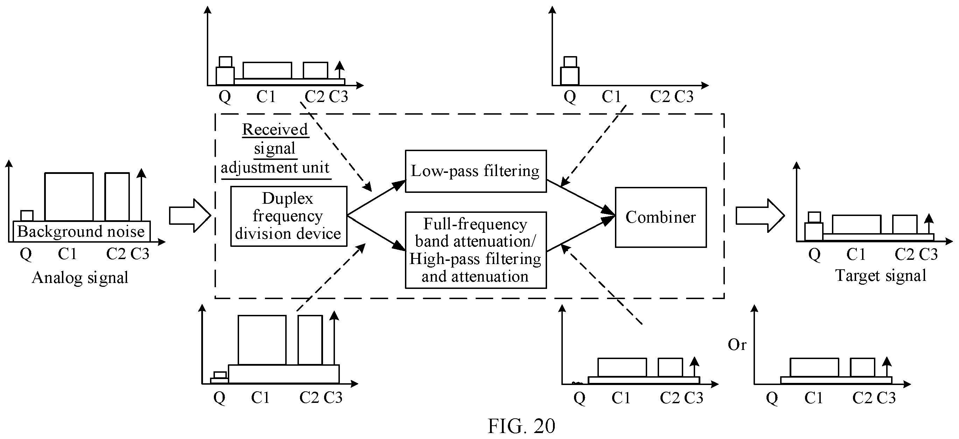

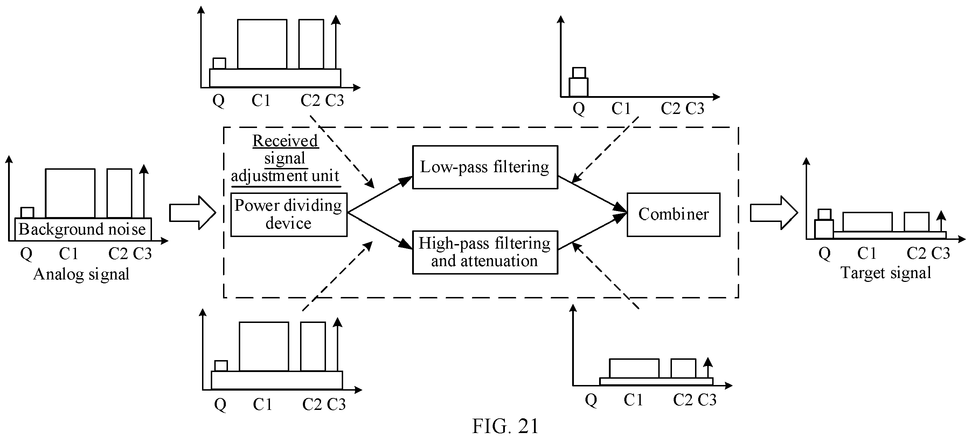

The following describes an implementation procedure of step C21 to step C24 by using an example in which the quantum signal frequency segment is in the low frequency segment and the classical signal frequency segment is in the high frequency segment (which correspond to the first possible case in step A1). For example, FIG. 20 and FIG. 21 are respectively diagrams of performing received signal adjustment processing on an analog signal according to an embodiment of this application. As shown in FIG. 20 or FIG. 21, the analog signal includes one quantum signal frequency segment Q and three classical signal frequency segments C1 to C3. The quantum signal frequency segment Q is in a low frequency segment, and the classical signal frequency segments C1 to C3 are in a high frequency segment. After entering a received signal adjustment unit, the analog signal is first split by a splitter into two signals. In FIG. 20, a duplex frequency division device is used as the splitter, and the duplex frequency division device can separate the classical signal frequency segments from the quantum signal frequency segment in the analog signal. In FIG. 21, a power dividing device is used as the splitter, and amplitudes of two signals output by the power dividing device are basically the same.

Refer to FIG. 20 or FIG. 21. Assuming that an upper output of the splitter is a quantum signal channel, the channel passes through a low-pass filter. After low-pass filtering, the classical signal frequency segments in the high frequency segment are basically filtered out, and the quantum signal frequency segment in the low frequency segment passes through the low-pass filter with a higher amplitude.

Still refer to FIG. 20 or FIG. 21. A lower output of the splitter is a classical signal channel. In FIG. 20, the classical signal channel may pass through full-frequency band attenuation, or may pass through a high-pass filter and have appropriate attenuation. In FIG. 21, the classical signal channel may pass through a high-pass filter and have appropriate attenuation. An objective of performing attenuation on the classical signal channel is to cause an average amplitude of a classical signal frequency segment in a signal (that is, a classical filtered signal) output on the classical signal channel to be similar to an average amplitude of a quantum signal frequency segment in a signal (that is, a quantum filtered signal obtained through attenuation processing) output on the quantum signal channel.

Still refer to FIG. 20 or FIG. 21. The signal output on the quantum signal channel and the signal output on the classical signal channel are combined by a combiner, to finally obtain a target signal, and the target signal is input to an ADC. In the target signal, an average amplitude of the quantum signal frequency segment in a low frequency segment is similar to an average amplitude of the classical signal frequency segment in a high frequency segment.

**Step C3**: The second quantum device separately performs sampling on the classical signal frequency segment and the quantum signal frequency segment in the target signal by using an analog-to-digital converter, to obtain the classical information and the quantum information.

In this implementation, the receiver needs only one ADC to complete sampling on the analog signal, so that hardware costs are low.

Optionally, a second implementation of step 603 includes the following step D1 to step D3.

**Step D1**: The second quantum device converts the received modulated optical signal into an analog signal by using a coherent detector, where the analog signal includes a quantum signal frequency segment and a classical signal frequency segment.

There is no overlapping frequency between the quantum signal frequency segment and the classical signal frequency segment, the quantum signal frequency segment corresponds to a subcarrier that carries the quantum information and that is in the modulated optical signal, and the classical signal frequency segment corresponds to a subcarrier that carries the classical information and that is in the modulated optical signal.

For an implementation of step D1, refer to step C1. Details are not described herein again in this embodiment of this application.

**Step D2**: The second quantum device performs sampling on the classical signal frequency segment in the analog signal by using a first analog-to-digital converter, to obtain the classical information.

**Step D3**: The second quantum device performs sampling on the quantum signal frequency segment in the analog signal by using a second analog-to-digital converter, to obtain the quantum information.

Because a frequency band of the quantum signal frequency segment is usually relatively narrow, a quantum signal has a high requirement on sampling accuracy of an ADC, and is suitable for an ADC with a low sampling rate but a high bit width (resolution). However, because a frequency band of the classical signal frequency segment is usually wide, a classical signal has a low requirement on sampling accuracy of an ADC, and is suitable for an ADC with a high sampling rate but a low bit width. In this embodiment of this application, two ADCs may be respectively used to perform sampling on the classical signal frequency segment and the quantum signal frequency segment in the analog signal, to meet respective sampling accuracy requirements.

In the quantum key distribution method provided in this embodiment of this application, the transmitter modulates and transmits the quantum information and the classical information on the same polarization of the optical signal. In comparison with a solution in which the quantum information and the classical information are respectively modulated and transmitted on different polarizations of the optical signal, this application saves one polarization degree of freedom, and can double a system capacity. In this embodiment of this application, the quantum information and the classical information are respectively modulated on subcarriers in different frequency segments in the optical signal, that is, frequency division multiplexing is performed on the optical signal, so that the receiver can separately obtain the quantum information and the classical information by demodulating different subcarriers. Demodulation for the quantum information is slightly affected by a signal received power for the classical information, so that the receiver can achieve a high signal-to-noise ratio of a classical signal and a high signal-to-noise ratio of a quantum signal, and modulation accuracy requirements of the classical signal and the quantum signal can be met. In addition, a set of devices is reused to transmit both the quantum information and the classical information, thereby reducing hardware costs.

A sequence of steps of the quantum key distribution method provided in this embodiment of this application can be appropriately adjusted, and the steps can also be correspondingly added or deleted based on a situation. Any method variation readily figured out by a person skilled in the art within the technical scope disclosed in this application shall fall within the protection scope of this application. For example, the first quantum device in the foregoing embodiment may also be used as the receiver of the quantum key distribution system, and the second quantum device may also be used as the transmitter of the quantum key distribution system, to implement bidirectional QKD communication and bidirectional classical communication. In other words, one quantum device may be used as the transmitter of the quantum key distribution system, or may be used as the receiver of the quantum key distribution system; and may have a capability of performing step 601 to step 603.

The following describes a virtual apparatus in embodiments of this application by using an example.

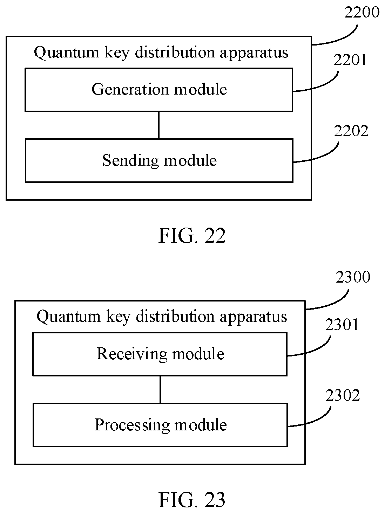

For example, FIG. 22 is a diagram of a structure of a quantum key distribution apparatus 2200 according to an embodiment of this application. The quantum key distribution apparatus 2200 is used in a first quantum device. As shown in FIG. 22, the quantum key distribution apparatus 2200 includes but is not limited to a generation module 2201 and a sending module 2202.

The generation module 2201 is configured to generate a modulated optical signal, where the modulated optical signal carries quantum information and classical information, both the classical information and the quantum information are modulated on at least one polarization of the modulated optical signal, the modulated optical signal includes a plurality of subcarriers in different frequency segments, the classical information and the quantum information are on different subcarriers among the plurality of subcarriers, and the classical information includes quantum key agreement information.

The sending module 2202 is configured to send the modulated optical signal to a second quantum device via an optical fiber link, where the quantum information and the quantum key agreement information are used by the first quantum device and the second quantum device to jointly generate a same quantum key.

Optionally, the quantum key agreement information includes one or more of random sampling data, error correction auxiliary information, a privacy amplification parameter, basis comparison information, or a consistency check parameter.

Optionally, the classical information further includes service communication data.

Optionally, the service communication data includes encrypted data.

Optionally, the generation module 2201 is configured to generate an analog modulated signal based on the quantum information and the classical information, where the analog modulated signal includes a quantum signal frequency segment obtained through modulation based on the quantum information and a classical signal frequency segment obtained through modulation based on the classical information, and there is no overlapping frequency between the quantum signal frequency segment and the classical signal frequency segment; perform signal adjustment processing on the analog modulated signal, to obtain a target modulated signal, where a difference between an average amplitude of the classical signal frequency segment and an average amplitude of the quantum signal frequency segment in the target modulated signal is greater than a first amplitude threshold; and perform electro-optic modulation on the target modulated signal, to obtain the modulated optical signal, where each subcarrier in the modulated optical signal corresponds to one quantum signal frequency segment or one classical signal frequency segment.

Optionally, a difference between an average amplitude of the classical signal frequency segment and an average amplitude of the quantum signal frequency segment in the analog modulated signal is less than a second amplitude threshold, and the second amplitude threshold is less than the first amplitude threshold.

Optionally, the generation module 2201 is configured to perform filtering processing on the analog modulated signal by using a filter, to obtain the target modulated signal, where the quantum signal frequency segment is in a first frequency band of the filter, the classical signal frequency segment is in a second frequency band of the filter, and frequency attenuation of the first frequency band is greater than frequency attenuation of the second frequency band.

Optionally, the generation module 2201 is configured to perform splitting processing on the analog modulated signal based on distribution areas of the quantum signal frequency segment and the classical signal frequency segment in the analog modulated signal, to obtain a plurality of split signals; separately perform filtering processing on the plurality of split signals by using a plurality of filters, to obtain one or more quantum filtered signals and one or more classical filtered signals, where each quantum filtered signal includes one or more adjacent quantum signal frequency segments, and each classical filtered signal includes one or more adjacent classical signal frequency segments; attenuate the one or more quantum filtered signals; and perform combining processing on all the classical filtered signals and all the attenuated quantum filtered signals, to obtain the target modulated signal.

Optionally, the generation module 2201 is configured to generate a first analog modulated signal based on the quantum information, and generate a second analog modulated signal based on the classical information, where the first analog modulated signal includes one or more quantum signal frequency segments, the second analog modulated signal includes one or more classical signal frequency segments, and there is no overlapping frequency between the quantum signal frequency segment and the classical signal frequency segment; attenuate the first analog modulated signal, to cause a difference between an average amplitude of the classical signal frequency segment in the second analog modulated signal and an average amplitude of the quantum signal frequency segment in the attenuated first analog modulated signal to be greater than a third amplitude threshold; and generate the modulated optical signal based on the second analog modulated signal and the attenuated first analog modulated signal, where each subcarrier in the modulated optical signal corresponds to one quantum signal frequency segment or one classical signal frequency segment.

Optionally, the generation module 2201 is configured to perform combining processing on the second analog modulated signal and the attenuated first analog modulated signal, to obtain a combined analog modulated signal; and perform electro-optic modulation on the combined analog modulated signal, to obtain the modulated optical signal.

Optionally, the generation module 2201 is configured to perform, by using a first electro-optic modulator, electro-optic modulation on the attenuated first analog modulated signal, to obtain a first optical signal; perform, by using a second electro-optic modulator, electro-optic modulation on the second analog modulated signal, to obtain a second optical signal; and perform beam combining processing on the first optical signal and the second optical signal, to obtain the modulated optical signal.

Optionally, the first analog modulated signal and the second analog modulated signal are respectively generated by different digital-to-analog converters.

Optionally, the modulated optical signal is from a same laser.

For another example, FIG. 23 is a diagram of a structure of another quantum key distribution apparatus 2300 according to an embodiment of this application. The quantum key distribution apparatus 2300 is used in a second quantum device. As shown in FIG. 23, the quantum key distribution apparatus 2300 includes but is not limited to a receiving module 2301 and a processing module 2302.

The receiving module 2301 is configured to receive, via an optical fiber link, a modulated optical signal sent by a first quantum device, where the modulated optical signal carries quantum information and classical information, both the classical information and the quantum information are modulated on at least one polarization of the modulated optical signal, the modulated optical signal includes a plurality of subcarriers in different frequency segments, the classical information and the quantum information are on different subcarriers among the plurality of subcarriers, and the classical information includes quantum key agreement information.

The processing module 2302 is configured to obtain the quantum information and the classical information based on the modulated optical signal, where the quantum information and the quantum key agreement information are used by the first quantum device and the second quantum device to jointly generate a same quantum key.

Optionally, the quantum key agreement information includes one or more of random sampling data, error correction auxiliary information, a privacy amplification parameter, basis comparison information, or a consistency check parameter.

Optionally, the classical information further includes service communication data.

Optionally, the service communication data includes encrypted data.

Optionally, the processing module 2302 is configured to convert the received modulated optical signal into an analog signal by using a coherent detector, where the analog signal includes a quantum signal frequency segment and a classical signal frequency segment, there is no overlapping frequency between the quantum signal frequency segment and the classical signal frequency segment, the quantum signal frequency segment corresponds to a subcarrier that carries the quantum information and that is in the modulated optical signal, and the classical signal frequency segment corresponds to a subcarrier that carries the classical information and that is in the modulated optical signal; perform received signal adjustment processing on the analog signal, to obtain a target signal, where a difference between an average amplitude of the classical signal frequency segment and an average amplitude of the quantum signal frequency segment in the target signal is less than an amplitude threshold; and separately perform sampling on the classical signal frequency segment and the quantum signal frequency segment in the target signal by using an analog-to-digital converter, to obtain the classical information and the quantum information.

Optionally, the processing module 2302 is configured to perform filtering processing on the analog signal by using a filter, to obtain the target signal, where the quantum signal frequency segment is in a first frequency band of the filter, the classical signal frequency segment is in a second frequency band of the filter, and frequency attenuation of the first frequency band is less than frequency attenuation of the second frequency band.

Optionally, the processing module 2302 is configured to perform splitting processing on the analog signal based on distribution areas of the quantum signal frequency segment and the classical signal frequency segment in the analog signal, to obtain a plurality of split signals; separately perform filtering processing on the plurality of split signals by using a plurality of filters, to obtain one or more quantum filtered signals and one or more classical filtered signals, where each quantum filtered signal includes one or more adjacent quantum signal frequency segments, and each classical filtered signal includes one or more adjacent classical signal frequency segments; attenuate the one or more classical filtered signals; and perform combining processing on all the quantum filtered signals and all the attenuated classical filtered signals, to obtain the target signal.

Optionally, the processing module 2302 is configured to convert the received modulated optical signal into an analog signal by using a coherent detector, where the analog signal includes a quantum signal frequency segment and a classical signal frequency segment, there is no overlapping frequency between the quantum signal frequency segment and the classical signal frequency segment, the quantum signal frequency segment corresponds to a subcarrier that carries the quantum information and that is in the modulated optical signal, and the classical signal frequency segment corresponds to a subcarrier that carries the classical information and that is in the modulated optical signal; perform sampling on the classical signal frequency segment in the analog signal by using a first analog-to-digital converter, to obtain the classical information; and perform sampling on the quantum signal frequency segment in the analog signal by using a second analog-to-digital converter, to obtain the quantum information.

For the apparatus in the foregoing embodiments, specific manners of executing operations by each module are described in detail in embodiments related to the method, and details are not described herein.

The following describes a basic hardware structure in embodiments of this application by using an example.

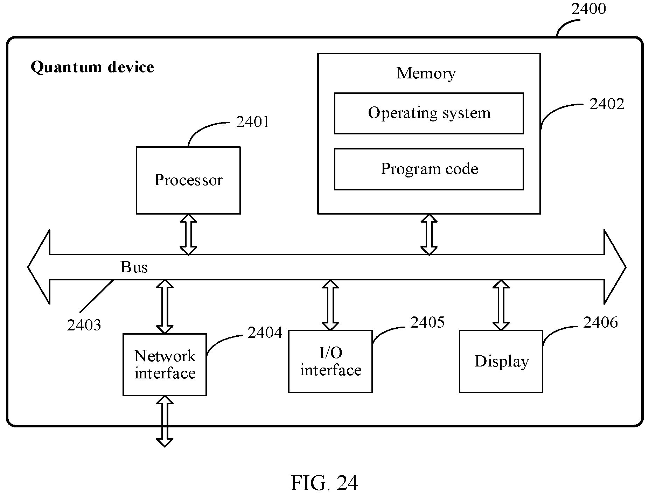

For example, FIG. 24 is a diagram of a hardware structure of a quantum device 2400 according to an embodiment of this application. As shown in FIG. 24, the quantum device 2400 includes a processor 2401 and a memory 2402, where the processor 2401 and the memory 2402 are connected through a bus 2403. FIG. 24 is described by using an example in which the processor 2401 and the memory 2402 are independent of each other. Optionally, the processor 2401 and the memory 2402 are integrated together. The quantum device 2400 may be, for example, a quantum key distribution device.

The memory 2402 is configured to store a computer program, where the computer program includes an operating system and program code. The memory 2402 is a storage medium of various types, for example, a read-only memory (read-only memory, ROM), a random access memory (random access memory, RAM), an electrically erasable programmable read-only memory (electrically erasable programmable read-only memory, EEPROM), a compact disc read-only memory (compact disc read-only memory, CD-ROM), a flash memory, an optical memory, a register, a compact disk storage, an optical disc storage, a magnetic disk, or another magnetic storage device.

The processor 2401 is a general-purpose processor or a dedicated processor. The processor 2401 may be a single-core processor or a multi-core processor. The processor 2401 includes at least one circuit, to perform the foregoing quantum key distribution method provided in this embodiment of this application.

Optionally, the quantum device 2400 further includes a network interface 2404, where the network interface 2404 is connected to the processor 2401 and the memory 2402 through the bus 2403. The network interface 2404 can implement communication between the quantum device 2400 and another device.

Optionally, the quantum device 2400 further includes an input/output (input/output, I/O) interface 2405, where the I/O interface 2405 is connected to the processor 2401 and the memory 2402 through the bus 2403. The processor 2401 can receive an input command, data, or the like through the I/O interface 2405. The I/O interface 2405 is used by the quantum device 2400 to connect to input devices. The input devices are, for example, a keyboard and a mouse. Optionally, in some possible scenarios, the network interface 2404 and the I/O interface 2405 are collectively referred to as a communication interface.

Optionally, the quantum device 2400 further includes a display 2406, where the display 2406 is connected to the processor 2401 and the memory 2402 through the bus 2403. The display 2406 can be configured to display an intermediate result, a final result, and/or the like generated by the processor 2401 by performing the foregoing method. In a possible implementation, the display 2406 is a touchscreen, to provide a human-machine interaction interface.

The bus 2403 is any type of communication bus configured to implement interconnection among internal devices of the quantum device 2400, for example, a system bus. In this embodiment of this application, an example in which the internal devices of the quantum device 2400 are interconnected through the bus 2403 is used for description. Optionally, the internal devices of the quantum device 2400 are communicatively connected to each other in a connection manner other than the bus 2403. For example, the internal devices of the quantum device 2400 are interconnected through a logical interface inside the quantum device 2400.

The foregoing devices may be separately disposed on chips that are independent of each other, or at least some or all of the devices may be disposed on a same chip. Whether the devices are independently disposed on different chips or integrated and disposed on one or more chips usually depends on a requirement of a product design. This embodiment of this application imposes no limitation on specific implementations of the foregoing devices.

The quantum device 2400 shown in FIG. 24 is merely an example. In an implementation process, the quantum device 2400 may further include other components, which are not enumerated one by one in this specification. The quantum device 2400 shown in FIG. 24 may implement quantum key distribution by performing all or some of steps of the method provided in the foregoing embodiment.

An embodiment of this application further provides a quantum key distribution system, including a first quantum device and a second quantum device. The first quantum device and the second quantum device are connected via an optical fiber link. The first quantum device is configured to perform steps performed by the first quantum device in the foregoing method embodiment, for example, step 601 and step 602. The second quantum device is configured to perform a step performed by the second quantum device in the foregoing method embodiment, for example, step 603.

An embodiment of this application further provides a computer-readable storage medium. The computer-readable storage medium stores instructions. When the instructions are executed by a processor, the step performed by the first quantum device or the second quantum device in the foregoing method embodiment is implemented.

An embodiment of this application further provides a computer program product, including a computer program. When the computer program is executed by a processor, the step performed by the first quantum device or the second quantum device in the foregoing method embodiment is implemented.

A person of ordinary skill in the art may understand that all or some of the steps of the foregoing embodiments may be implemented by hardware or a program instructing related hardware. The program may be stored in a computer-readable storage medium. The storage medium may be a read-only memory, a magnetic disk, an optical disc, or the like.

In embodiments of this application, terms "first", "second", and "third" are merely used for description, but shall not be understood as an indication or implication of relative importance.

The term "and/or" in this application describes only an association relationship for describing associated objects and represents that three relationships may exist. For example, A and/or B may represent the following three cases: Only A exists, both A and B exist, and only B exists. In addition, the character "/" in this specification generally indicates an "or" relationship between the associated objects.

It should be noted that information (including but not limited to user equipment information, personal information of a user, and the like), data (including but not limited to data used for analysis, stored data, displayed data, and the like), and signals in this application are used under authorization by the user or full authorization by all parties, and collection, use, and processing of related data need to conform to related laws, regulations, and standards of related countries and regions.

The foregoing descriptions are merely optional embodiments of this application, but are not intended to limit this application. Any modification, equivalent replacement, improvement, or the like made within the concept and principle of this application shall fall within the protection scope of this application.

## Claims

1. A quantum key distribution method, wherein the method comprises:
generating, by a first quantum device, a modulated optical signal, wherein the modulated optical signal carries quantum information and classical information, both the classical information and the quantum information are modulated on at least one polarization of the modulated optical signal, the modulated optical signal comprises a plurality of subcarriers in different frequency segments, the classical information and the quantum information are on different subcarriers among the plurality of subcarriers, and the classical information comprises quantum key agreement information; and
sending, by the first quantum device, the modulated optical signal to a second quantum device via an optical fiber link, wherein the quantum information and the quantum key agreement information are used by the first quantum device and the second quantum device to jointly generate a same quantum key.

2. The method according to claim 1, wherein the quantum key agreement information comprises one or more of random sampling data, error correction auxiliary information, a privacy amplification parameter, basis comparison information, or a consistency check parameter.

3. The method according to claim 1 or 2, wherein the classical information further comprises service communication data.

4. The method according to claim 3, wherein the service communication data comprises encrypted data.

5. The method according to any one of claims 1 to 4, wherein the generating, by the first quantum device, the modulated optical signal comprises:
generating, by the first quantum device, an analog modulated signal based on the quantum information and the classical information, wherein the analog modulated signal comprises a quantum signal frequency segment obtained through modulation based on the quantum information and a classical signal frequency segment obtained through modulation based on the classical information, and there is no overlapping frequency between the quantum signal frequency segment and the classical signal frequency segment;
performing, by the first quantum device, signal adjustment processing on the analog modulated signal, to obtain a target modulated signal, wherein a difference between an average amplitude of the classical signal frequency segment and an average amplitude of the quantum signal frequency segment in the target modulated signal is greater than a first amplitude threshold; and
performing, by the first quantum device, electro-optic modulation on the target modulated signal, to obtain the modulated optical signal, wherein each subcarrier in the modulated optical signal corresponds to one quantum signal frequency segment or one classical signal frequency segment.

6. The method according to claim 5, wherein a difference between an average amplitude of the classical signal frequency segment and an average amplitude of the quantum signal frequency segment in the analog modulated signal is less than a second amplitude threshold, and the second amplitude threshold is less than the first amplitude threshold.

7. The method according to claim 5 or 6, wherein the performing, by the first quantum device, signal adjustment processing on the analog modulated signal, to obtain the target modulated signal comprises:
performing, by the first quantum device, filtering processing on the analog modulated signal by using a filter, to obtain the target modulated signal, wherein the quantum signal frequency segment is in a first frequency band of the filter, the classical signal frequency segment is in a second frequency band of the filter, and frequency attenuation of the first frequency band is greater than frequency attenuation of the second frequency band.

8. The method according to claim 5 or 6, wherein the performing, by the first quantum device, signal adjustment processing on the analog modulated signal, to obtain the target modulated signal comprises:
performing, by the first quantum device, splitting processing on the analog modulated signal based on distribution areas of the quantum signal frequency segment and the classical signal frequency segment in the analog modulated signal, to obtain a plurality of split signals;
separately performing, by the first quantum device, filtering processing on the plurality of split signals by using a plurality of filters, to obtain one or more quantum filtered signals and one or more classical filtered signals, wherein each quantum filtered signal comprises one or more adjacent quantum signal frequency segments, and each classical filtered signal comprises one or more adjacent classical signal frequency segments;
attenuating, by the first quantum device, the one or more quantum filtered signals; and
performing, by the first quantum device, combining processing on all the classical filtered signals and all the attenuated quantum filtered signals, to obtain the target modulated signal.

9. The method according to any one of claims 1 to 4, wherein the generating, by the first quantum device, the modulated optical signal comprises:
generating, by the first quantum device, a first analog modulated signal based on the quantum information, and generating a second analog modulated signal based on the classical information, wherein the first analog modulated signal comprises one or more quantum signal frequency segments, the second analog modulated signal comprises one or more classical signal frequency segments, and there is no overlapping frequency between the quantum signal frequency segment and the classical signal frequency segment;
attenuating, by the first quantum device, the first analog modulated signal, to cause a difference between an average amplitude of the classical signal frequency segment in the second analog modulated signal and an average amplitude of the quantum signal frequency segment in the attenuated first analog modulated signal to be greater than a third amplitude threshold; and
generating, by the first quantum device, the modulated optical signal based on the second analog modulated signal and the attenuated first analog modulated signal, wherein each subcarrier in the modulated optical signal corresponds to one quantum signal frequency segment or one classical signal frequency segment.

10. The method according to claim 9, wherein the generating, by the first quantum device, the modulated optical signal based on the second analog modulated signal and the attenuated first analog modulated signal comprises:
performing, by the first quantum device, combining processing on the second analog modulated signal and the attenuated first analog modulated signal, to obtain a combined analog modulated signal; and
performing, by the first quantum device, electro-optic modulation on the combined analog modulated signal, to obtain the modulated optical signal.

11. The method according to claim 9, wherein the generating, by the first quantum device, the modulated optical signal based on the second analog modulated signal and the attenuated first analog modulated signal comprises:
performing, by the first quantum device by using a first electro-optic modulator, electro-optic modulation on the attenuated first analog modulated signal, to obtain a first optical signal;
performing, by the first quantum device by using a second electro-optic modulator, electro-optic modulation on the second analog modulated signal, to obtain a second optical signal; and
performing, by the first quantum device, beam combining processing on the first optical signal and the second optical signal, to obtain the modulated optical signal.

12. The method according to any one of claims 9 to 11, wherein the first analog modulated signal and the second analog modulated signal are respectively generated by different digital-to-analog converters.

13. The method according to any one of claims 1 to 12, wherein the modulated optical signal is from a same laser.

14. A quantum key distribution method, wherein the method comprises:
receiving, by a second quantum device via an optical fiber link, a modulated optical signal sent by a first quantum device, wherein the modulated optical signal carries quantum information and classical information, both the classical information and the quantum information are modulated on at least one polarization of the modulated optical signal, the modulated optical signal comprises a plurality of subcarriers in different frequency segments, the classical information and the quantum information are on different subcarriers among the plurality of subcarriers, and the classical information comprises quantum key agreement information; and
obtaining, by the second quantum device, the quantum information and the classical information based on the modulated optical signal, wherein the quantum information and the quantum key agreement information are used by the first quantum device and the second quantum device to jointly generate a same quantum key.

15. The method according to claim 14, wherein the quantum key agreement information comprises one or more of random sampling data, error correction auxiliary information, a privacy amplification parameter, basis comparison information, or a consistency check parameter.

16. The method according to claim 14 or 15, wherein the classical information further comprises service communication data.

17. The method according to claim 16, wherein the service communication data comprises encrypted data.

18. The method according to any one of claims 14 to 17, wherein the obtaining, by the second quantum device, the quantum information and the classical information based on the modulated optical signal comprises:
converting, by the second quantum device, the received modulated optical signal into an analog signal by using a coherent detector, wherein the analog signal comprises a quantum signal frequency segment and a classical signal frequency segment, there is no overlapping frequency between the quantum signal frequency segment and the classical signal frequency segment, the quantum signal frequency segment corresponds to a subcarrier that carries the quantum information and that is in the modulated optical signal, and the classical signal frequency segment corresponds to a subcarrier that carries the classical information and that is in the modulated optical signal;
performing, by the second quantum device, received signal adjustment processing on the analog signal, to obtain a target signal, wherein a difference between an average amplitude of the classical signal frequency segment and an average amplitude of the quantum signal frequency segment in the target signal is less than an amplitude threshold; and
separately performing, by the second quantum device, sampling on the classical signal frequency segment and the quantum signal frequency segment in the target signal by using an analog-to-digital converter, to obtain the classical information and the quantum information.

19. The method according to claim 18, wherein the performing, by the second quantum device, received signal adjustment processing on the analog signal, to obtain the target signal comprises:
performing, by the second quantum device, filtering processing on the analog signal by using a filter, to obtain the target signal, wherein the quantum signal frequency segment is in a first frequency band of the filter, the classical signal frequency segment is in a second frequency band of the filter, and frequency attenuation of the first frequency band is less than frequency attenuation of the second frequency band.

20. The method according to claim 18, wherein the performing, by the second quantum device, received signal adjustment processing on the analog signal, to obtain the target signal comprises:
performing, by the second quantum device, splitting processing on the analog signal based on distribution areas of the quantum signal frequency segment and the classical signal frequency segment in the analog signal, to obtain a plurality of split signals;
separately performing, by the second quantum device, filtering processing on the plurality of split signals by using a plurality of filters, to obtain one or more quantum filtered signals and one or more classical filtered signals, wherein each quantum filtered signal comprises one or more adjacent quantum signal frequency segments, and each classical filtered signal comprises one or more adjacent classical signal frequency segments;
attenuating, by the second quantum device, the one or more classical filtered signals; and
performing, by the second quantum device, combining processing on all the quantum filtered signals and all the attenuated classical filtered signals, to obtain the target signal.

21. The method according to any one of claims 14 to 17, wherein the obtaining, by the second quantum device, the quantum information and the classical information based on the modulated optical signal comprises:
converting, by the second quantum device, the received modulated optical signal into an analog signal by using a coherent detector, wherein the analog signal comprises a quantum signal frequency segment and a classical signal frequency segment, there is no overlapping frequency between the quantum signal frequency segment and the classical signal frequency segment, the quantum signal frequency segment corresponds to a subcarrier that carries the quantum information and that is in the modulated optical signal, and the classical signal frequency segment corresponds to a subcarrier that carries the classical information and that is in the modulated optical signal;
performing, by the second quantum device, sampling on the classical signal frequency segment in the analog signal by using a first analog-to-digital converter, to obtain the classical information; and
performing, by the second quantum device, sampling on the quantum signal frequency segment in the analog signal by using a second analog-to-digital converter, to obtain the quantum information.

22. A quantum key distribution apparatus, used in a first quantum device, wherein the apparatus comprises:
a generation module, configured to generate a modulated optical signal, wherein the modulated optical signal carries quantum information and classical information, both the classical information and the quantum information are modulated on at least one polarization of the modulated optical signal, the modulated optical signal comprises a plurality of subcarriers in different frequency segments, the classical information and the quantum information are on different subcarriers among the plurality of subcarriers, and the classical information comprises quantum key agreement information; and
a sending module, configured to send the modulated optical signal to a second quantum device through an optical fiber link, wherein the quantum information and the quantum key agreement information are used by the first quantum device and the second quantum device to jointly generate a same quantum key.

23. The apparatus according to claim 22, wherein the quantum key agreement information comprises one or more of random sampling data, error correction auxiliary information, a privacy amplification parameter, basis comparison information, or a consistency check parameter.

24. The apparatus according to claim 22 or 23, wherein the classical information further comprises service communication data.

25. The apparatus according to claim 24, wherein the service communication data comprises encrypted data.

26. The apparatus according to any one of claims 22 to 25, wherein the generation module is configured to:
generate an analog modulated signal based on the quantum information and the classical information, wherein the analog modulated signal comprises a quantum signal frequency segment obtained through modulation based on the quantum information and a classical signal frequency segment obtained through modulation based on the classical information, and there is no overlapping frequency between the quantum signal frequency segment and the classical signal frequency segment;
perform signal adjustment processing on the analog modulated signal, to obtain a target modulated signal, wherein a difference between an average amplitude of the classical signal frequency segment and an average amplitude of the quantum signal frequency segment in the target modulated signal is greater than a first amplitude threshold; and
perform electro-optic modulation on the target modulated signal, to obtain the modulated optical signal, wherein each subcarrier in the modulated optical signal corresponds to one quantum signal frequency segment or one classical signal frequency segment.

27. The apparatus according to claim 26, wherein a difference between an average amplitude of the classical signal frequency segment and an average amplitude of the quantum signal frequency segment in the analog modulated signal is less than a second amplitude threshold, and the second amplitude threshold is less than the first amplitude threshold.

28. The apparatus according to claim 26 or 27, wherein the generation module is configured to:
perform filtering processing on the analog modulated signal by using a filter, to obtain the target modulated signal, wherein the quantum signal frequency segment is in a first frequency band of the filter, the classical signal frequency segment is in a second frequency band of the filter, and frequency attenuation of the first frequency band is greater than frequency attenuation of the second frequency band.

29. The apparatus according to claim 26 or 27, wherein the generation module is configured to:
perform splitting processing on the analog modulated signal based on distribution areas of the quantum signal frequency segment and the classical signal frequency segment in the analog modulated signal, to obtain a plurality of split signals;
separately perform filtering processing on the plurality of split signals by using a plurality of filters, to obtain one or more quantum filtered signals and one or more classical filtered signals, wherein each quantum filtered signal comprises one or more adjacent quantum signal frequency segments, and each classical filtered signal comprises one or more adjacent classical signal frequency segments;
attenuate the one or more quantum filtered signals; and
perform combining processing on all the classical filtered signals and all the attenuated quantum filtered signals, to obtain the target modulated signal.

30. The apparatus according to any one of claims 22 to 25, wherein the generation module is configured to:
generate a first analog modulated signal based on the quantum information, and generate a second analog modulated signal based on the classical information, wherein the first analog modulated signal comprises one or more quantum signal frequency segments, the second analog modulated signal comprises one or more classical signal frequency segments, and there is no overlapping frequency between the quantum signal frequency segment and the classical signal frequency segment;
attenuate the first analog modulated signal, to cause a difference between an average amplitude of the classical signal frequency segment in the second analog modulated signal and an average amplitude of the quantum signal frequency segment in the attenuated first analog modulated signal to be greater than a third amplitude threshold; and
generate the modulated optical signal based on the second analog modulated signal and the attenuated first analog modulated signal, wherein each subcarrier in the modulated optical signal corresponds to one quantum signal frequency segment or one classical signal frequency segment.

31. The apparatus according to claim 30, wherein the generation module is configured to:
perform combining processing on the second analog modulated signal and the attenuated first analog modulated signal, to obtain a combined analog modulated signal; and
perform electro-optic modulation on the combined analog modulated signal, to obtain the modulated optical signal.

32. The apparatus according to claim 30, wherein the generation module is configured to:
perform, by using a first electro-optic modulator, electro-optic modulation on the attenuated first analog modulated signal, to obtain a first optical signal;
perform, by using a second electro-optic modulator, electro-optic modulation on the second analog modulated signal, to obtain a second optical signal; and
perform beam combining processing on the first optical signal and the second optical signal, to obtain the modulated optical signal.

33. The apparatus according to any one of claims 30 to 32, wherein the first analog modulated signal and the second analog modulated signal are respectively generated by different digital-to-analog converters.

34. The apparatus according to any one of claims 22 to 33, wherein the modulated optical signal is from a same laser.

35. A quantum key distribution apparatus, used in a second quantum device, wherein the apparatus comprises:
a receiving module, configured to receive, via an optical fiber link, a modulated optical signal sent by a first quantum device, wherein the modulated optical signal carries quantum information and classical information, both the classical information and the quantum information are modulated on at least one polarization of the modulated optical signal, the modulated optical signal comprises a plurality of subcarriers in different frequency segments, the classical information and the quantum information are on different subcarriers among the plurality of subcarriers, and the classical information comprises quantum key agreement information; and
a processing module, configured to obtain the quantum information and the classical information based on the modulated optical signal, wherein the quantum information and the quantum key agreement information are used by the first quantum device and the second quantum device to jointly generate a same quantum key.

36. The apparatus according to claim 35, wherein the quantum key agreement information comprises one or more of random sampling data, error correction auxiliary information, a privacy amplification parameter, basis comparison information, or a consistency check parameter.

37. The apparatus according to claim 35 or 36, wherein the classical information further comprises service communication data.

38. The apparatus according to claim 37, wherein the service communication data comprises encrypted data.

39. The apparatus according to any one of claims 35 to 38, wherein the processing module is configured to:
convert the received modulated optical signal into an analog signal by using a coherent detector, wherein the analog signal comprises a quantum signal frequency segment and a classical signal frequency segment, there is no overlapping frequency between the quantum signal frequency segment and the classical signal frequency segment, the quantum signal frequency segment corresponds to a subcarrier that carries the quantum information and that is in the modulated optical signal, and the classical signal frequency segment corresponds to a subcarrier that carries the classical information and that is in the modulated optical signal;
perform received signal adjustment processing on the analog signal, to obtain a target signal, wherein a difference between an average amplitude of the classical signal frequency segment and an average amplitude of the quantum signal frequency segment in the target signal is less than an amplitude threshold; and
separately perform sampling on the classical signal frequency segment and the quantum signal frequency segment in the target signal by using an analog-to-digital converter, to obtain the classical information and the quantum information.

40. The apparatus according to claim 39, wherein the processing module is configured to:
perform filtering processing on the analog signal by using a filter, to obtain the target signal, wherein the quantum signal frequency segment is in a first frequency band of the filter, the classical signal frequency segment is in a second frequency band of the filter, and frequency attenuation of the first frequency band is less than frequency attenuation of the second frequency band.

41. The apparatus according to claim 39, wherein the processing module is configured to:
perform splitting processing on the analog signal based on distribution areas of the quantum signal frequency segment and the classical signal frequency segment in the analog signal, to obtain a plurality of split signals;
separately perform filtering processing on the plurality of split signals by using a plurality of filters, to obtain one or more quantum filtered signals and one or more classical filtered signals, wherein each quantum filtered signal comprises one or more adjacent quantum signal frequency segments, and each classical filtered signal comprises one or more adjacent classical signal frequency segments;
attenuate the one or more classical filtered signals; and
perform combining processing on all the quantum filtered signals and all the attenuated classical filtered signals, to obtain the target signal.

42. The apparatus according to any one of claims 35 to 38, wherein the processing module is configured to:
convert the received modulated optical signal into an analog signal by using a coherent detector, wherein the analog signal comprises a quantum signal frequency segment and a classical signal frequency segment, there is no overlapping frequency between the quantum signal frequency segment and the classical signal frequency segment, the quantum signal frequency segment corresponds to a subcarrier that carries the quantum information and that is in the modulated optical signal, and the classical signal frequency segment corresponds to a subcarrier that carries the classical information and that is in the modulated optical signal;
perform sampling on the classical signal frequency segment in the analog signal by using a first analog-to-digital converter, to obtain the classical information; and
perform sampling on the quantum signal frequency segment in the analog signal by using a second analog-to-digital converter, to obtain the quantum information.

43. A quantum key distribution system, comprising a first quantum device and a second quantum device, wherein the first quantum device and the second quantum device are connected via an optical fiber link, the first quantum device is configured to perform the method according to any one of claims 1 to 13, and the second quantum device is configured to perform the method according to any one of claims 14 to 21.

44. A quantum device, comprising a processor and a memory, wherein
the memory is configured to store a computer program, wherein the computer program comprises program instructions; and
the processor is configured to invoke the computer program, to implement the method according to any one of claims 1 to 21.
